# EUROPEAN PATENT APPLICATION

(11) **EP 2 744 154 A1**
(43) Date of publication of application: **18.06.2014**
(21) Application number: 11871375.9
(22) Date of filing: 10.11.2011
(51) Int. Cl.: H04L 12/46, H04L 9/14

(54) **NETWORK GATEWAY APPARATUS**

(30) Priority: 22.08.2011 JP 2011180215
(71) Applicant: INTO Co. Ltd., Tokyo 170-0005 (JP)
(72) Inventor: OGAWA Keiko, Tokyo 170-0005 (JP)
(74) Representative: Berryman, Robert Jan
(86) International application number: PCT/JP2011/075963
(87) International publication number: WO 2013/027302

(57) **Abstract**

A network gateway apparatus is provided, which is able to add an encryption communication function that easily enhances security without forcing setting changes in an existing network environment.

A process of "deceiving" the TCP/IP protocol stack 205 is performed In order to add a minimum requisite program for implementation of a XPTCP gateway apparatus 101, while utilizing a function of a TCP/IP protocol stack 205 to the utmost. A source MAC address, a source IP address, a source port number, a destination MAC address, a destination IP address and a destination port number are pre-written in a rewriting table in order that the TCP/IP protocol stack 205 is able to process a packet that should be unrelated to an IP address allocated to the XPTCP gateway apparatus 101. Then, a source MAC address and a source IP address written in a received packet are rewritten into a false MAC address and a false IP address, respectively, and a destination MAC address and a destination IP address are rewritten into an IP address and a MAC address allocated to the XPTCP gateway apparatus 101, and then the rewritten addresses are provided to the TCP/IP protocol stack 205.

## Description

### [Technical Field]

The present invention relates to a network gateway apparatus.

More specifically, the present invention relates to a network gateway apparatus that adds an encrypted communication function to easily increase security without requiring any network setting changes to the existing network environment.

### [Technical Background]

The inventor of the present invention has recognized the possibility and technical limitations in TCP/IP networks and the problems, from an early stage that the internet becomes explosively popular in general public. For example, internet mail is fundamentally equivalent to a postcard, and if the communication path is monitored by another party, the party may easily acquire both the header and content of the mail. Encryption of a communication application, such as internet mail or web browsing, for the enhancement of security has all been coped with by the application program. Therefore, an application supported by the encrypted communication cannot perform encrypted communication with an application that is not supported by the encrypted communication. This has posed a dilemma that applications supported by the encrypted communication will remain not being broadly used.

The similar problem that encrypted communication environment is very slow to prevail applies to IPSec that realizes encrypted communication in the network layer. The basic technical concept of IPSec may be good, that is, to encrypt every communication in the network layer rather than in the application layer. However, under present circumstances, some problems are pointed out, such as that connection is difficult to establish, settings before establishing connection is cumbersome, communication tends to be disconnected, or user authentication has to be separately taken into account. These problems have not been fundamentally solved and accordingly there has been no prospect for broad use until today.

In view of the possibility and the technical limits of TCP/IP network as well as the problems, the inventor has invented a scheme for realizing authentication and encrypted communication in a transport layer and has attempted to implement and improve the scheme until today. In the present specification, the scheme for authentication and encryption in the transport layer, the scheme being based on the technique disclosed in Patent Document 1, is hereinafter referred to as "XPTCP" in a sense of expanding TCP (eXPand).

Patent Document 1 is a prior art reference related to an encryption protocol of the transport layer provided by the inventor.
[Patent Document 1] JP-B-3783142

### [Disclosure of the Invention]

When XPTCP disclosed in Patent Document 1 is introduced into an existing network environment, it is preferable to minimize barriers to the introduction. It is also desirable that all the terminals on the network can use "zero configuration". That is, it is desirable that all the terminals on the network are able to use the new functions provided by the XPTCP without changing settings or the like or without the necessity of introducing new software.

To implement the new functions without introducing new software to a terminal, a gateway apparatus may be inserted in a network path. However, this gateway apparatus requires, by any means, some setting changes in the terminals of existing devices or application modes.

For example, when the gateway apparatus is a proxy server, the terminal has to use an application program supported by the proxy server, and this program requires that the appropriate IP address and port number of the proxy server be set therein. In other words, when the application program is not supported by the proxy server, communication via the proxy server will not be implemented to begin with.

Further, for example, when the gateway apparatus is a router, the IP address of a default gateway must also be set in the terminal.

When the gateway apparatus is introduced into an existing network environment, a vacant IP address has to be ensured for the gateway apparatus and setting changes to other network devices, such as a router that is an existing default gateway, may also be necessary.

The present invention has been made to solve such problems and has an object of providing a network gateway apparatus that can easily add encryption communication functions of enhanced security to an existing network environment without requiring any setting changes.

In order to solve the above problems, the network gateway apparatus of the present invention includes an inside NIC, an outside NIC and an initial setting unit that sets a promiscuous mode in the inside NIC and the outside NIC, a TCP/IP protocol stack that performs TCP/IP communication processing between the inside NIC and the outside NIC, and an address conversion processor that converts a source MAC address written in a reception packet that is received from the inside NIC to a first false MAC address, converts a source IP address to a first false IP address, converts a destination MAC address to an inside NICMAC address allocated to the inside NIC, converts a destination IP address to an inside NICIP address allocated to an inside NIC to transmit the reception packet to the TCP/IP protocol stack, and restores a source MAC address, a source IP address, a destination MAC address and a destination IP address written in a transmission packet received from the TCP/IP protocol stack, into a source MAC address, a source IP address, a destination MAC address and a destination IP address written in a reception packet, for transmission to the outside NIC.

In order that the TCP/IP protocol stack can process a packet that should have no relation to an IP address allocated to the inside NIC or the outside NIC, a source MAC address and a source IP address written in a reception packet are rewritten into a false MAC address and a false IP address, and a destination MAC address and a destination IP address are rewritten into an IP address and a MAC address allocated to the inside NIC and then given to the TCP/IP protocol stack.

The present invention provides a network gateway apparatus that can easily add encryption communication functions of enhanced security to an existing network environment without requiring any setting changes.

### [Brief Description of the Drawings]

Figure 1 is a schematic diagram of a network including a network gateway apparatus according to an embodiment of the present invention;
Figure 2 is a functional block diagram of a XPTCP gateway apparatus;
Figure 3 is a diagram of a field configuration including various tables and a list provided in in the XPTCP gateway apparatus;
Figure 4 is a schematic diagram of a packet structure;
Figure 5 is a functional block diagram of an address conversion unit;
Figure 6 is a functional block diagram of an inside NIC reception processing unit;
Figure 7 is a functional block diagram of an outside NIC reception processing unit;
Figure 8 is a functional block diagram of an outside NIC transmission processing unit;
Figure 9 is a functional block diagram of an inside NIC transmission processing unit;
Figure 10 is a functional block diagram of an XPTCP processing unit;
Figure 11 is a flowchart of an inside NIC packet reception process carried out in the address conversion unit;
Figure 12 is a flowchart of an outside NIC packet reception process carried out in the address conversion unit:
Figure 13 is a flowchart of an outside NIC packet transmission process carried out in the address conversion unit;
Figure 14 is a flowchart of an inside NIC packet transmission process carried out in the address conversion unit;
Figure 15 is a flowchart of an XPTCP process carried out in the XPTCP processing unit;
Figure 16 is a flowchart of initialization process carried out in a socket processing unit;
Figure 17 is a flowchart of a connection request transfer process carried out in the socket processing unit;
Figure 18 is a schematic diagram of variation of a packet passing through the XPTCP gateway apparatus;
Figure 19 is a schematic diagram of variation of a packet passing through the XPTCP gateway apparatus;
Figure 20 is a schematic diagram of variation of a packet passing through the XPTCP gateway apparatus;
Figure 21 is an overhead view of a summary timing diagram of XPTCP connection establishment sequence in the XPTCP gateway apparatus;
Figure 22 is a diagram specifically showing a first half processing in the timing diagram of XPTCP connection establishment sequence in the XPTCP gateway apparatus;
Figure 23 is a diagram specifically showing a second half processing in the timing diagram of XPTCP connection establishment sequence in the XPTCP gateway apparatus;
Figure 24 is a timing diagram a TCP data transfer sequence in the XPTCP gateway apparatus;
Figure 25 is an overhead view showing an entire timing diagram of TCP disconnection sequence in the XPTCP connection in an XPTCP gateway apparatus;
Figure 26 is a diagram specifically showing a first half processing in the timing diagram showing the TCP disconnection sequence, in the XPTCP gateway apparatus;
Figure 27 is a diagram specifically showing a second half processing in the timing diagram showing the TCP disconnection sequence, in the XPTCP gateway apparatus;
Figure 28 is a schematic diagram of an application mode that rewrites the destination IP address of a packet to be transmitted, in an XPTCP gateway apparatus; and
Figure 29 is a schematic diagram of an application mode that rewrites the source IP address of a packet to be transmitted, in an XPTCP gateway apparatus.

### [Best Modes for Implementing the Invention]

### [Outline of Network]

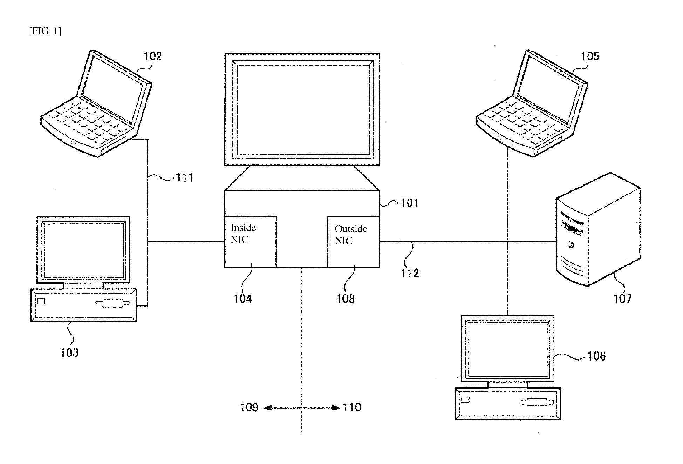

Figure 1 is a schematic diagram of a network including a network gateway apparatus, related to an embodiment of the present invention.

Since the network gateway apparatus of the present embodiment provides XPTCP functions, the network gateway apparatus is hereinafter referred to as a XPTCP gateway apparatus 101.

Figure 1 a network including the XPTCP gateway apparatus.

On a left side of the XPTCP gateway apparatus 101 are two XPTCP-unsupported terminals, i.e. an XPTCP-unsupported PC 102 and an XPTCP-unsupported PC 103, which are connected to an inside NIC 104 of the XPTCP gateway apparatus 101.

On a right side of the XPTCP gateway apparatus 101 are an XPTCT-unsupported PC 105 that is a terminal unsupported by XPTCP, a XPTCP-supported PC 106 supported by XPTCP, and a XPTCP-supported server 107 that is supported by XPTCP are connected to an outside NIC 108 of the XPTCP gateway apparatus 101.

Hereinafter, the network on the left of the XPTCP gateway apparatus 101 is referred to as an XPTCP-unsupported network 109, and the network on the right of the XPTCP gateway apparatus 101 is referred to as a XPTCP-supported network 110.

Specifically, in the XPTCP gateway apparatus 101, the inside NIC 104 that could be termed a first NIC is connected to the XPTCP-unsupported network 109, and the outside NIC 108 that could be termed a second NIC is connected to the XPTCP-supported network 110.

The XPTCP gateway apparatus 101 processes packets, so that devices, such as the XPTCP-unsupported PC 102 and the XPTCP-unsupported PC 103, in the XPTCP-unsupported network 109 can be connected, using XPTCP functions, to network devices, such as the XPTCP-supported PC 106 and the XPTCP-supported server 107, in the XPTCP-supported network 110.

The XPTCP gateway apparatus 101 provides XPTCP functions to the XPTCP-unsupported CP 102 connected to the inside NIC 104. Specifically, when the XPTCP-unsupported PC 102 on the XPTCP-unsupported network 109 is connected to the XPTCP-unsupported PC 105 on the XPTCP-supported network 110, the XPTCP gateway apparatus 101 transmits packets as they are to perform communication in the generally accepted TCP/IP network, similar to a conventional manner. However, when the XPTCP-unsupported PC 102 on the XPTCP-unsupported network 109 is connected to the XPTCP-supported PC 106 or the XPTCP-supported server 107 on the XPTCP-supported network 110, the XPTCP gateway apparatus 101 rewrites a packet transmitted from the XPTCP-unsupported PC 102 into an XPTCP-supported packet, and transmits the XPTCP-supported packet to the XPTCP-supported PC 106 or the XPTCP-supported server 107.

### [Internal configuration of XPTCP gateway apparatus 101]

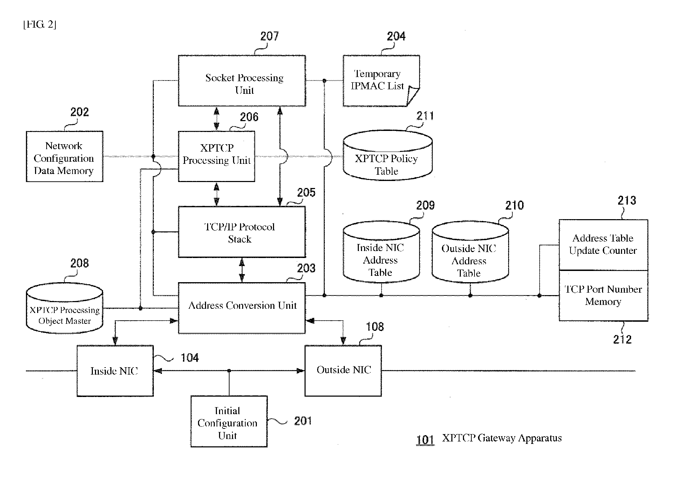

Figure 2 is a functional block diagram of the the XPTCP gateway apparatus 101.

The XPTCP gateway apparatus 101 can be implemented by introducing a program into a computer that runs a network OS so as to operate as the XPTCP gateway apparatus 101. OS's such as Windows (trademark), Linux (trademark), or Apple's OSX (trademark) may be used. However, since the XPTCP gateway apparatus 101 is required to be installed on a network communication path, the computer requires at least two NICs (Network interface Cards). These are the inside NIC 104 and the outside NIC 108.

The inside NIC 104 and the outside NIC 108 are generally known network interface cards to establish connections on known TCP/IP networks. Both the inside NIC 104 and the outside NIC 108 include well-known and unique 48-bit MAC (Media Access Control) addresses. The inside NIC 104 and the outside NIC 108 shown in the functional block diagram of Figure 2 are not merely hardware NICs but function as device drivers.

Upon start up of the network OS, the initial setting unit 201 sets both the inside NIC 104 and the outside NIC 108 to a "promiscuous mode", in addition to performing basic settings for the network. In this mode which is also termed "unprotected mode", all packets flowing through the network can be received and read. This is a setting required in the XPTCP gateway apparatus 101 of the present embodiment.

The network OS, not shown, carries out the basic settings at the startup. In this case, the respective MAC addresses and IP addresses of the inside NIC 104 and the outside NIC 108 are stored in a network setting information memory 202.

When an address conversion unit 203 of the XPTCP gateway apparatus 101 receives a packet from the inside NIC 104, it reads information from the network setting information memory 202, a temporary IPMAC list 204, and an inside NIC address table 209. The source MAC address, source IP address, a source port number, a destination MAC address, and a destination IP address written in the packet are converted into a first temporary NIC MAC address, a first temporary NIC IP address, an index port number, an inside side NIC MAC address, and an inside side NIC IP address, respectively. These values are then provided to the TCP/IP protocol stack 205 of the OS.

The destination port number, however, is not changed.

Similarly, when a packet is received from the outside NIC 108, the address conversion unit 203 reads information from the network setting information memory 202, the temporary IPMAC list 204, and the outside NIC address table 210. A source MAC address, a source IP address, a source port number, a destination MAC address, a destination IP address, and a destination port number written in the packet are then converted into a second temporary NIC MAC address, a second temporary NIC IP address, an index port number, an outer side NIC MAC address, an outer side NIC IP address, and a dynamic port number, respectively. This information is then provided to the TCP/IP protocol stack 205 of the OS. These values are then provided to the TCP/IP protocol stack 205 of the OS.

When a packet is sent to the outside NIC 108 by the TCP/IP protocol stack 205, the address conversion unit 203 refers to the outside NIC address table 210, using the index port number. Then, the address conversion unit 203 restores the source MAC address, the source IP address, the source port number, the destination MAC address, the destination IP address, and the destination port number written in the packet, to the ones before being converted and transmits the restored information from the outside NIC 108.

Similarly, when a packet is sent to the inside NIC 104 by the TCP/IP protocol stack 205, the address conversion unit 203 refers to the inside NIC address table 209. Then, the address conversion unit 203 restores the source MAC address, the source IP address, the source port number, the destination MAC address, the destination IP address, and the destination port number written in the packet, using the index port number, to the ones before being converted and transmits the restored information from the outside NIC 104.

When an ARP (Address Resolution Protocol) packet is sent to the outside NIC 108 by the TCP/IP protocol stack 205, the address conversion unit 203 responds with a false address described in the temporary IPMAC list, and the TCP/IP protocol stack 205 is permitted to perform normal operation as if a response has been received from a physical medium.

The inside NIC address table 209 that is also referred to as a first NIC address mapping table is a table used by the address conversion unit 203 to rewrite or restore the MAC address, IP address, and port number written in a packet being transmitted between the inside NIC 104 and the TCP/IP protocol stack 205.

The outside NIC address table 210 that is also referred to as a second NIC address mapping table is a table used by the address conversion unit 203 to rewrite or restore the MAC address, IP address, and port number written in a packet transmitted between the outside NIC 108 and the TCP/IP protocol stack 205.

The inside NIC address table 209 and the outside NIC address table 210 may each be referred to as an address conversion table.

For the sake of convenience, in the following description, the XPTCP-unsupported network device, such as the XPTCP-unsupported PC 102 or 103, in the XPTCP-unsupported network 109 is referred to as a "terminal", and the XPTCP-supported network device, such as the XPTCP-supported server 107 or the XPTCP-supported PC 106, in the XPTCP-supported network 110 is referred to as a "server". Since the XPTCP-unsupported PC 105 is not an object of communication using XPTCP, it is excluded from the definition of the "terminal" or "server".

The TCP/IP protocol stack 205 is a network driver program provided in the OS. The TCP/IP protocol stack 205 transmits/receives packets to/from NICs via the address conversion unit 203 to transmit/receive packets data to/from application programs.

The TCP/IP protocol stack 205 provides an application program interface (API) known as a socket (for example a "BSD socket") that is used by application programs.

When a packet is received, the TCP/IP protocol stack 205 strips the packet in order of ARP header, IP header, TCP or UDP header, connects the payload of the packet to return the packet to data stream, and provides the data to a predetermined application.

When a data stream is received from an application, the TCP/IP protocol stack 205 segments the payload data into predetermined data sizes through a socket formed in advance by the TCP/IP protocol stack 205 and specified by the application. Then, a TCP or a UDP header, an IP header and an ARP header are added in this order, for transmission to a transmission destination through an NIC.

In particular, in handling a packet of TCP protocol, the TCP/IP protocol stack 205 forms a virtual communication channel that is a well-known connection in the TCP/IP protocol stack 205, using a well-known 3-way handshaking protocol that is SYN-ACK & SYN-ACK.

Thus, the XPTCP gateway apparatus 101 of the present embodiment forms a connection in both of the inside NIC 104 and the outside NIC 108, and data is transferred between the connections.

The inside NIC address table 209 and the outside NIC address table 210 correlate the connection established by the TCP/IP protocol stack 205 to an original source MAC address, a source IP address, a source port number, a destination MAC address, a destination IP address, and a destination port number written in the actual packet, by providing an index port number.

In this way, the inside NIC address table 209 and the outside NIC address table 210 can also serve as tables that manage the connection created by the TCP/IP protocol stack 205.

The XPTCP processing unit 206, which can be an extended TCP processing unit, receives data from a socket, i.e. "gateway of one connection", formed by the TCP/IP protocol stack 205 and transfers the received data to another socket, i.e. "gateway of the other connection, formed by the TCP/IP protocol stack 205 ".

The XPTCP processing unit 206 performs an authentication process and an encryption communication process, according to instructions stored in the XPTCP processing object master 208. In particular, when the XPTCP processing unit 206 transfers the data received from the TCP/IP protocol stack 205 to the TCP/IP protocol stack 205, the XPTCP processing unit 206 rewrites the source IP address, the source port number, the destination IP address, and the destination port number which are allocated to the socket.

The socket processing unit 207 acts as a pseudo server program which is automatically executed after start of the OS. At the same time, when a connect event is received from the TCP/IP protocol stack 205, being induced by a packet received from the inside NIC 104, the socket processing unit 207 issues a connect request event, i.e. connection request, to the TCP/IP protocol stack 205 to create a new socket for the outside NIC 108 on the basis of a source IP address, a source port number, a destination IP address, and a destination port number allocated to the socket which has received the connect event. The socket processing unit 207 only performs a processing of opening/closing sockets with respect to the TCP/IP protocol stack 205. The actual transmission/reception of data to/from the TCP/IP protocol stack 205 is performed by the XPTCP processing unit 206.

In the block diagram of the XPTC gateway apparatus 101 shown in Figure 2, the inside NIC 104, the outside NIC 108, the address conversion unit 203, the TCP/IP protocol stack 205, the XPTCP processing unit 206, and the socket processing unit 207 correspond to a hierarchical model of TCP/IP based on the well-known OSI seven layer reference model.

The inside NIC 104 and the outside NIC 108, including their respective NIC drivers, correspond to physical layer and data link layer.

The TCP/IP protocol stack 205 corresponds to a network layer (IP, ICMP (Internet Control Message Protocol), ARP) and a transport layer (TCP, UDP).

The socket processing unit 207 corresponds to an application layer.

The address conversion unit 203 is arranged between the data link layer and the network layer and rewrites the source MAC address, the source IP address, the source port number, the destination MAC address, the destination IP address, and the destination port number written in the packet, so that the TCP/IP protocol stack 205 can process packets that should originally be unrelated. Thus, the address conversion unit 203 corresponds to a network layer.

The XPTCP processing unit 206 is interposed between the transport layer and the application layer and transfers network data streams, performs authentication and encryption or decoding, other than opening/closing processing of a socket. Thus, the XPTCP processing unit 206 corresponds to a transport layer that implements authentication and encryption communication which cannot be done in an application layer, while also corresponding to an application layer in a function of transferring data.

The TCP/IP protocol stack 205 installed as standard in the network OS only handles communication with respect to the IP address originally stored in the network setting information memory 202, i.e. an IP address allocated to a NIC of itself. On the other hand, the XPTCP gateway apparatus 101 needs to handle any packet. Further, the XPTCP uses the functions of TCP/IP having a complicated communication procedure, while implementing authentication and encryption processes in the transport layer.

To implement the XPTCP gateway apparatus 101 by adding minimum necessary programs, while maximally efficiently using the functions of the TCP/IP protocol stack 205, the XPTCP gateway apparatus 101 of the present embodiment performs a processing of "masking" the TCP/IP protocol stack 205.

In order that packets that should not have related to the IP addresses allocated to the XPTCP gateway apparatus 101 are ensured to be processed by the TCP/IP protocol stack 205, a source MAC address, a source IP address, a destination MAC address, and a destination IP address written in a packed received from the inside NIC 104 or the outside NIC 108 are temporarily rewritten into an IP address, a MAC address, and the like allocated to the XPTCP gateway apparatus 101. Then, the packet in which a source MAC address, a source IP address and a port number have been rewritten is provided to the TCP/IP protocol stack 205.

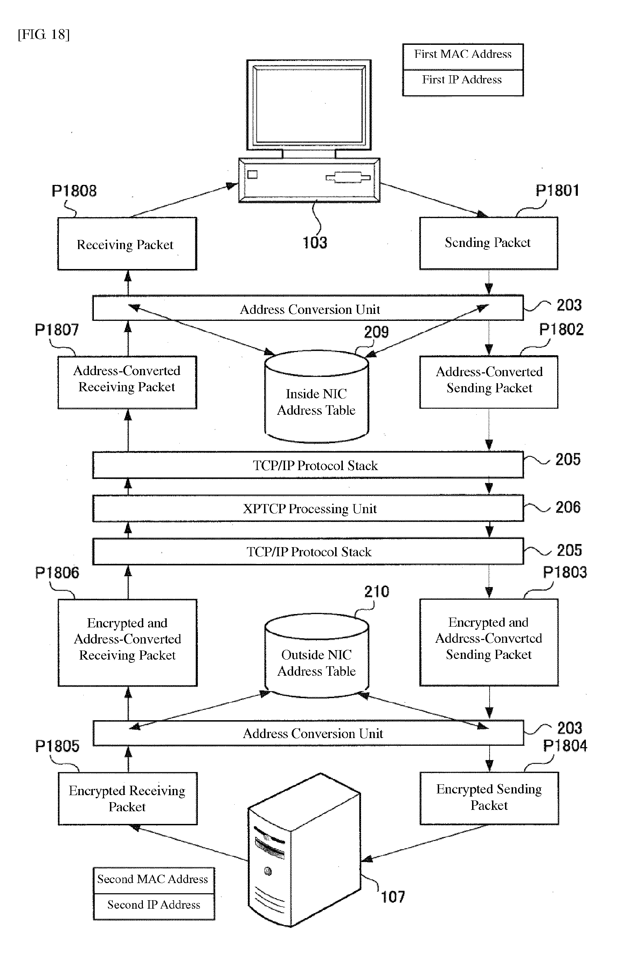

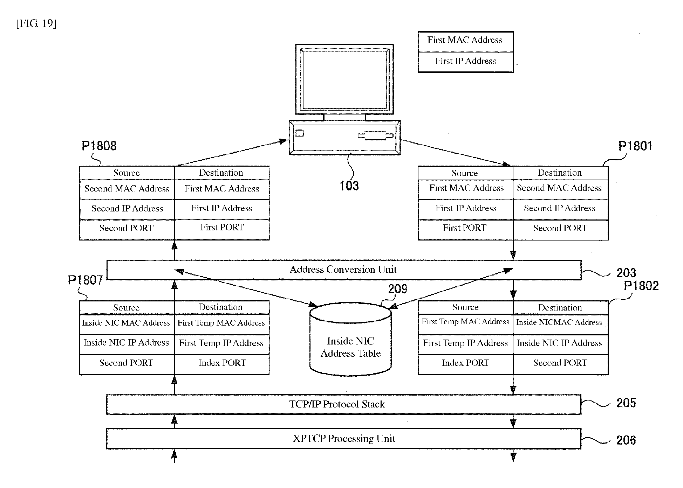

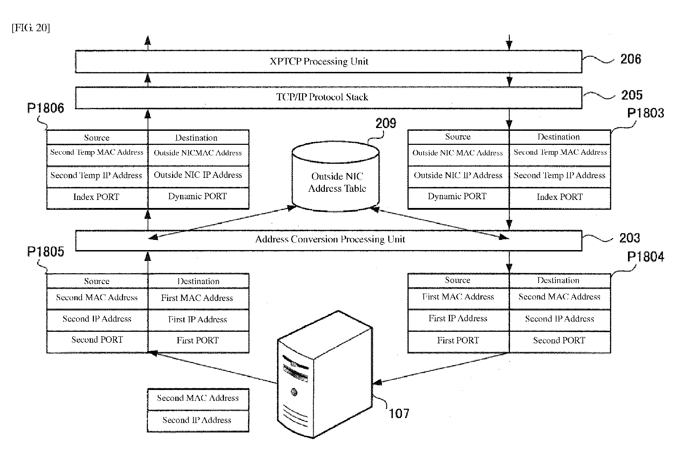

The details of the rewriting process, i.e. the process of rewriting the MAC addresses of the source and destination, the IP address and the port number written in packets, will be described with reference to Figures 18 to 20.

### [Configuration of tables and list]

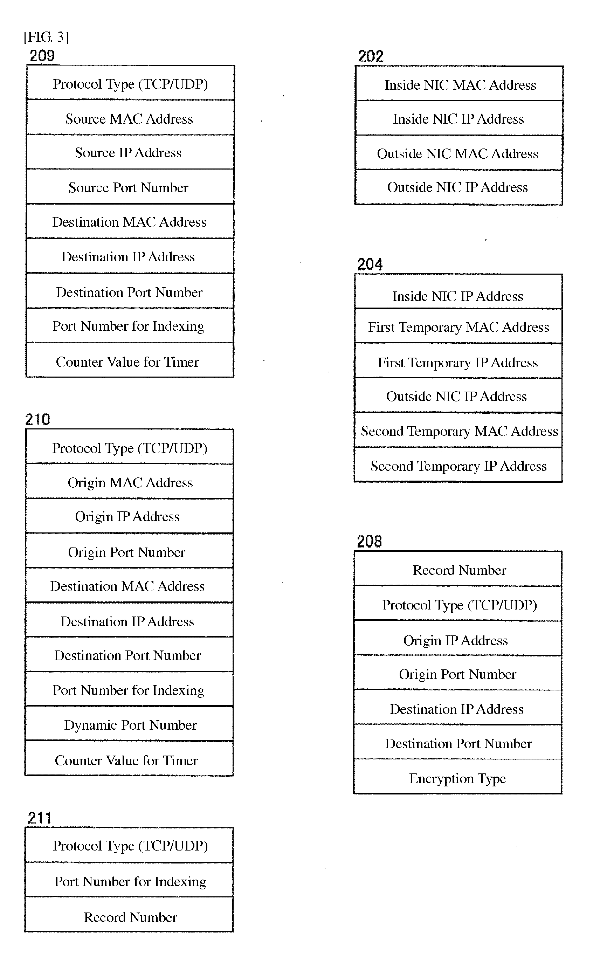

Figure 3 shows a field configuration of various tables and a list provided in the XPTCP gateway apparatus 101.

The inside NIC address table 209, the outside NIC address table 210, the XPTCP policy table 211, and the temporary IPMAC list 204 are all provided in a RAM, not shown. When the XPTCP processing object master 208, provided in a non-volatile storage, such as a hard disk device, not shown, is started by the address conversion unit 203, the XPTCP processing object master 208 is copied to the RAM, not shown. The network setting information memory 202 is provided in the RAM, not shown, by the network OS.

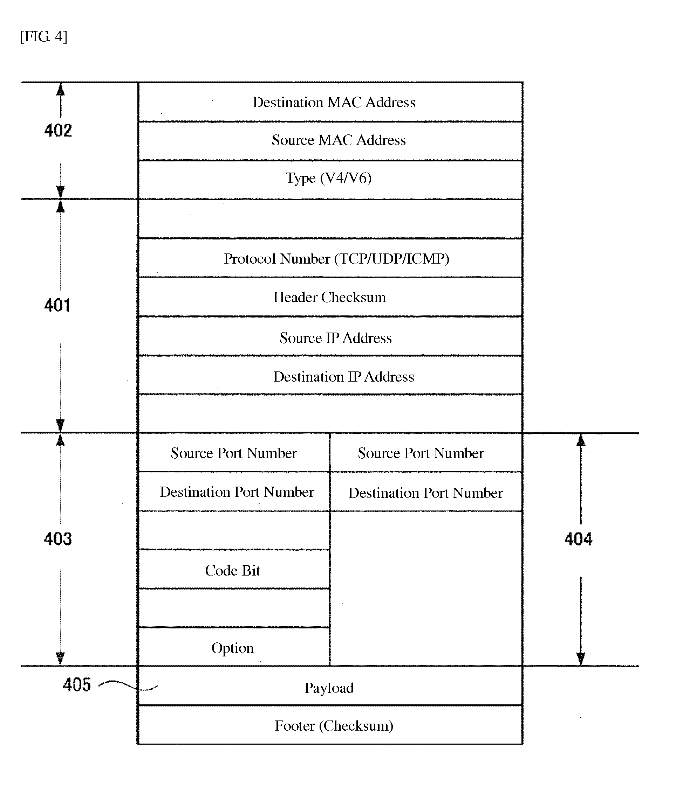

Figure 4 is a schematic diagram showing the structure of a packet. The field of the inside NIC address table 209 and the outside NIC address table 210 is described with reference to the field configuration diagram of Figure 3 and the schematic diagram of Figure 4.

The inside NIC address table 209 includes a protocol classification field, a source MAC address field, a source IP address field, a source port number field, a destination MAC address field, a destination IP address field, a destination port number field, an index port number field, and a counter value field for timers.

The outside NIC address table 210 includes a protocol classification field, a source MAC address field, a source IP address field, a source port number field, a destination MAC address field, a destination IP address field, a destination port number field, an index port number field, a dynamic port number field and a counter value field for timers.

A flag identifying a packet as a TCP or UDP packet as a classification of a packet received from the inside NIC 104 or the outside NIC 108 is stored in a protocol classification field. This is read from the protocol number of the IP header 401. While the XPTCP gateway apparatus 101 of the present embodiment is described at this stage only focusing on TCP packets, the protocol classification field is prepared for enabling process of UDP packets in near future.

The source MAC address written in the packet received from the inside NIC 104 or the outside NIC 108 is stored in a source MAC address field. This is read from the source MAC address of the MAC header 402.

The source IP address written in the packet received from the inside NIC 104 or the outside NIC 108 is stored in a source IP address field. This is read from the source I P address of the IP header 401.

The source port number written in the packet received from the inside NIC 104 or the outside NIC 108 is stored in a source port number field. This is read from the source port number of the TCP header 403 or the UDP header 404.

The destination MAC address written in the packet received from the inside NIC 104 or the outside NIC 108 is stored in a destination MAC address field. This is read from the destination MAC address of the MAC header 402.

The destination IP address written in the packet received from the inside NIC 104 or the outside NIC 108 is stored in a destination IP address field. This is read from the destination IP address of the IP header 401.

The destination port number written in the packet received from the inside NIC 104 or the outside NIC 108 is stored in a destination port number field. This is read from the destination port number of the TCP header 403 or the UDP header 404.

Immediately before the address conversion unit 203 transmits a packet from the inside NIC 104 or the outside NIC 108, index information is stored in the index port number field. The index information is used for specifying the location of description in records in the inside NIC address table 209 or the outside NIC address table 210, in restoring the source MAC address, source IP address, source port number, destination MAC address, destination IP address, and destination port number written in the packet.

A value in the TCP port number memory 212 shown in Figure 2 is used as the index port number. Specifically, when a TCP SYN packet coinciding with the record of the XPTCP processing object master 208 is received from the inside NIC 104, the address conversion unit 203 records a new record in the inside NIC address table 209, using the port number as an index. Since index port numbers are used as indexes, index port numbers are required to have univocality (must be unique or avoid overlap). Therefore, when a value in the TCP port number memory 212 is to be used, but the value is already in use, the value in the TCP port number memory 212 is incremented to ensure if the port number is available.

A TCP SYN packet is a packet expressing the start (establishment request) in the well-known TCP communication. Of a six-bit code in the TCP header 403, the fifth bit is "1".

A TCP ACK packet is a packet expressing confirmation response in the well-known TCP communication. Of a six-bit code in the TCP header 403, the second bit is "1".

A TCP FIN packet is a packet expressing closure (disconnect request) in the well-known TCP communication. Of a six-bit code in the TCP header 403, the sixth bit is a packet of "1".

In a TCP ACK/SYN packet is a packet, the second and fifth bits in the six-bit code in the TCP header 403 are packets of "1". The TCP ACK/SYN packet has two meanings of the TCP SYN packet and the TCP ACK packet.

The dynamic port number provided only in the outside NIC address table 210 is stored in a dynamic port number field. This dynamic port number is automatically produced by the TCP/IP protocol stack 205 as a source port number of a connection when the connection is established with a XPTCP-supported network device, i.e. a server, such as the XPTCP-supported server 107 or the XPTCP-supported PC 106 in the XPTCP-supported network 110, by the TCP/IP protocol stack 205 via the outside NIC 108. In many cases, the dynamic port number is the number of the well-known ephemeral port which is also called a "short-lived port". A number in a range of 49152 to 65535 is assigned as a port number by the TCP/IP protocol stack 205.

The timer counter value field stores a value of an address table update counter 213 for measuring elapsed time. The value is used in determining that the record of the inside NIC address table 209 or the outside NIC address table 210 is no longer be used and in discarding the record based on the determination.

The network setting information memory 202 of Figure 3 stores the MAC and IP addresses of the inside NIC 104 and the outside NIC 108, the addresses being obtained as a result of performing basic settings of the network in starting the network OS. That is, the network setting information memory 202 is provided by the network OS.

The inside NIC MAC address indicates an original MAC address of the inside NIC 104. The inside NIC IP address indicates an original IP address of the inside NIC 104. The outside NIC MAC address indicates an original MAC address of the outside NIC 108. The outside NIC IP address indicates an original IP address of the outside NIC 108.

The temporary IPMAC list 204 shown in Figure 3 includes an inside NIC IP address field, a first temporary MAC address field, a first temporary IP address field, an outside NIC IP address field, a second temporary MAC address field, and a second temporary IP address field.

The IP address of the inside NIC 104 is stored in the inside NIC IP address field. This is obtained from the network setting information memory 202. The first temporary MAC address is stored in the first temporary MAC address field. The first temporary IP address is stored in the first temporary IP address field. The IP address of the outside NIC 108 is stored in the outside NIC IP address field. This is obtained from the network setting information memory 202. The second temporary MAC address is stored in the second temporary MAC address field. The second temporary IP address is stored in the second temporary IP address field. The first temporary MAC address, the first temporary IP address, the second temporary MAC address, and the second temporary IP address are false MAC and IP addresses used by the address conversion processing unit 203 and the XPTCP processing unit 206.

The XPTCP processing object master 208 shown in Figure 3, which may also be regarded as an extended TCP processing object master, has a record number field, a protocol classification field, a source IP address field, a source port number field, a destination IP address field, a destination port number field, an encryption type filed.

The record number field is the record number of the XPTCP processing object master 208, and it is one of a set of consecutive numbers which univocally identifies the record of the XPTCP processing object master 208. The information stored in the record number field uniquely identifies a record used on the XPTCP policy table 211 described later. Accordingly, as long as it is possible to univocally identify a record, identification does not have to be performed using a record number.

The flag identifying a packet as TCP or UDP is stored in the protocol classification field to classify a packet entering from the inside NIC 104. This is read from the protocol number of the IP header 401.

The source IP address written in the packet from the inside NIC 104 is stored in the source IP address field. This is read from the source IP address of the IP header 401.

The source port number written in the packet from the inside NIC 104 is stored in the source port number field. This is read from the source port number of the TCP header 403 or the UDP header 404.

The destination IP address written in the packet from the inside NIC 104 is stored in a destination IP address field. This is read from the destination IP address of the IP header 401.

The destination port number written in the packet from the inside NIC 104 is stored in the destination port number field. This is read from the destination port number of the TCP header 403 or the UDP header 404.

Information used for the XPTCP session, such as authentication and encryption type, is stored in the encryption type and/or other fields.

Thus, the XPTCP processing object master 208 stores combinations of the IP addresses and port numbers of packets transmitted from terminals to the server, as well as the information regarding encryption and the like applied to a data stream passing through the connection formed in the inside NIC 104 and the outside NIC 108 according to the packet having a combination of the IP address and the port number.

The exemplary XPTCP policy table 211 illustrated in Figure 3 includes a protocol type field, an index port number field, and a record number field.

A flag that identifies the packet which enters inside NIC 104 as a TCP or UDP packet is stored in the protocol type field as in the XPTCP processing object master 208. This is read from the protocol number of the IP header 401.

The index port number, which is written by the address conversion processing unit 203 to the packet in the session, is stored in the index port number field.

The record number field corresponds to the record number of the XPTCP processing object master 208. Therefore, the record number described in this field designates the record of the XPTCP processing object master 208, and also refers to the encryption type and other fields of the XPTCP processing object master 208.

Thus, the XPTCP policy table 211 links the index port number to encryption type and other information to identify the encryption type applied to the data stream passing through the TCP connection corresponding to the index port number.

Returning to Figure 2 again, description of each part is continued.

The address table update counter 213 determines whether a period of time has elapsed, in deleting a record that is no longer used in the inside NIC address table 209 and the outside NIC address table 210. The address table update counter 213 is a loop counter which counts from 0 to 119, for example. Starting from 0, the address table update counter 213 increments the measurement value by 1 every second to count up to 119 and then starts counting from 0 again.

In the TCP disconnection sequence described later, in response to a TCP FIN packet from either the inside NIC 104 or the outside NIC 108, the address conversion unit 203 writes the value of the address update counter 213 in the count value field for timers of a corresponding record in the inside NIC address table 209 and the outside NIC address table 210. The value of the count value field for timers is then compared with the value of the address table update counter 213. As a result of the comparison, if it is determined that 60 seconds or more have elapsed, the communication session is determined to have been closed, and the record is deleted.

The TCP port number memory 212 stores port numbers for filling in the index port number field in the inside NIC address table 209 and the outside NIC address table 210.

When a TCP SYN packet is received from the inside NIC 104, it is necessary to create a new connection. The address conversion unit 203 performs an address conversion in order to make the TCP/IP protocol stack 205 create the new connection. Being caused by this address conversion process, the TCP/IP protocol stack 205 forms the new connection with respect to a packet in which a false source IP address, destination IP address and the like different from the original source IP address, destination IP address and the like are written.

When the address conversion unit 203 attaches the false source IP address and destination IP address and the like to the packet, it has to correlate the connection formed by the TCP/IP protocol stack 205 with the false source IP address, the destination IP address and the like. In order to identify this connection and finally restore the original source IP address, destination IP address and the like, it is necessary to add identification information to the packet. This is the index port number.

When a new record is created in the inside NIC address table 209, the value of the TCP port number memory 212 is incremented by one, and the value is written in the index port number field.

Since the index port number must be a number which the TCP/IP protocol stack 205 can recognize, the maximum value recorded in the TCP port number memory 212 is 65535.

A value for incrementing the port number between 49152 to 65535 by 1 is written in the TCP port number memory 212. This value corresponds to the number of the well-known ephemeral port which is also called a "short-lived port". The TCP port number memory 212 may be configured by a loop counter.

### [Internal configuration of the address conversion unit 203]

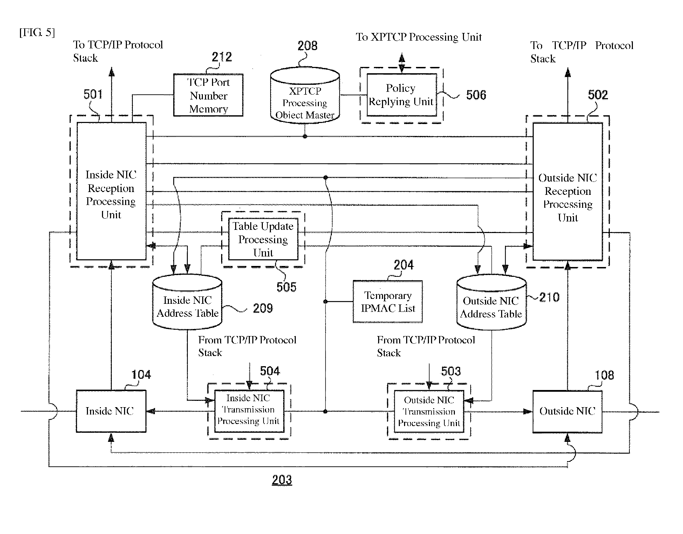

Figure 5 is a functional block diagram of the address conversion unit 203.

The address conversion unit 203 is divided into five functional blocks including an inside NIC reception processing unit 501, an outside NIC reception processing unit 502, an outside NIC transmission processing unit 503, an inside NIC transmission processing unit 504, the table update processing unit 505, and the policy replying unit 506.

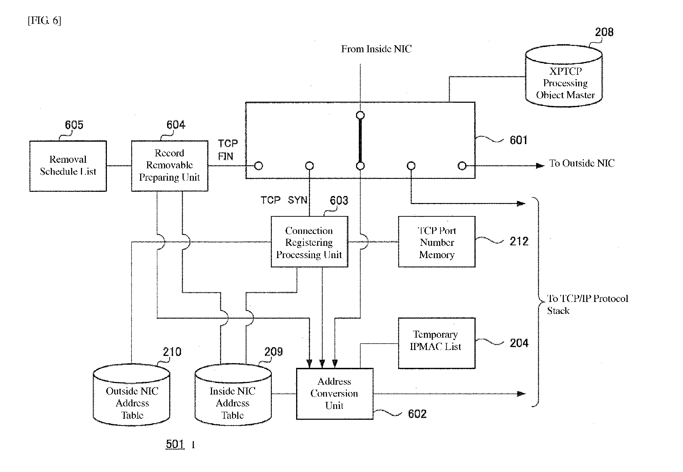

The inside NIC reception processing unit 501 is described first. Figure 6 is a functional block diagram of the inside NIC reception processing unit 501.

The reception packet decision unit 601 firstly refers to the XPTCP processing object master 208 to determine whether, for example, a packet received by the inside NIC 104 is subject to a XPTCP processing.

When the packet does not coincide, for example, with either an ICMP packet or the XPTCP processing object master 208, the reception packet decision unit 601 transfers the packet as it is to the outside NIC 108.

When the packet is not a XPTCP processing object transmitted with respect to the XPTCP gateway apparatus 101, the reception packet decision unit 601 transfers the packet as it is to the TCP/IP protocol stack 205.

When the packet inputted from the inside NIC 104 does coincide with the XPTCP processing object master 208, the reception packet decision unit 601 then examines the packet in detail.

If the packet is a TCP data packet, the reception packet decision unit 601 provides the TCP packet to the address replacement unit 602.

The address replacement unit 602 searches through the inside NIC address table 209 with a source MAC address, a source IP address, a source port number, a destination MAC address, a destination IP address, and a destination port number, to identify a record. Then, the address replacement unit 602 rewrites the source MAC address, the source IP address, the source port number, the destination MAC address, and the destination IP address of the packet, for transfer to the TCP/IP protocol stack 205.

If the packet processed in the reception packet decision unit 601 is a TCP SYN packet, the packet is unregistered in the inside NIC address table 209. Therefore, the reception packet decision unit 601 sends the TCP SYN packet to the connection registration processing unit 603, which additionally creates a new record in the inside NIC address table 209 with the source MAC address, the source IP address, the source port number, the destination MAC address, the destination IP address, and the destination port number written in the TCP SYN packet. Then, the value of the TCP port number memory 212 is incremented by one, and this value is recorded, as an index port number, in the index port number field of the inside NIC address table 209. The same record is also additionally created in the outside NIC address table 210. Then, the connection registration processing unit 603 provides the TCP SYN packet to the address replacement unit 602. As in the case of the TCP packet described above, the address replacement unit 602 rewrites the source MAC address, the source IP address, the source port number, the destination MAC address, and the destination IP address of the TCP SYN packet, for transfer to the TCP/IP protocol stack 205.

If the packet processed in the reception packet decision unit 601 is a TCP FIN packet, the packet signals an end of the connection formed in the TCP/IP protocol stack 205, and at the same time, there arises a necessity of deleting records in the inside NIC address table 209 and the outer side NIC address table 210. However, the records have to be timely deleted after lapse of a predetermined time from the closure of the connections to both of the inside NIC 104 and the outside NIC 108.

Thus, the reception packet decision unit 601 provides the TCP FIN packet to the record removal preparing unit 604.

The record removal preparing unit 604 searches through the inside NIC address table with the source MAC address, the source IP address, the source port number, the destination MAC address, the destination IP address, and the destination port number written in the TCP FIN packet, to identify a corresponding record and write the index port number of the record in the removal schedule list 605. The removal schedule list 605 is provided in the RAM, not shown, and recorded with the index port number of the record to be deleted. Then, the record removal preparation unit 604 provides the TCP FIN packet to the address replacement unit 602. The address replacement unit 602, as in the case of the TCP packet and TCP SYN packet, rewrites the source MAC address, the source IP address, the source port number, the destination MAC address, and the destination IP address of the TCP FIN packet, for transfer to the TCP/IP protocol stack 205.

In any of the TCP data packet, the TCP SYN packet, and the TCP FIN packet, the address replacement unit 602 will not rewrite a destination port number.

In rewriting the MAC address, IP address, and port number written in the packet, the address replacement unit 602 refers to the temporary IPMAC list 204.

Hereinafter, the details of the outside NIC reception processing unit 502 are explained.

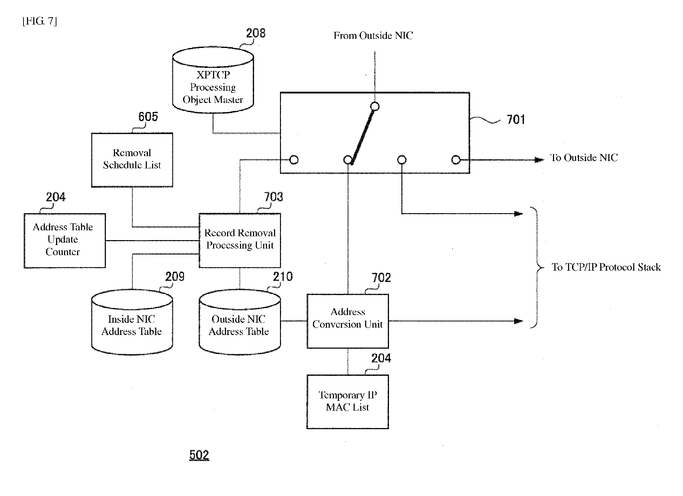

Figure 7 is a functional block diagram of the outside NIC reception processing unit 502.

The reception packet decision unit 701 refers to the XPTCP processing object master 208 to determine whether or not a packet received by the outside NIC 108 can be an object of the XPTCP processing.

When the packet received by the outside NIC 108 is not an object of processing, not coinciding, for example, with either an ICMP packet or the XPTCP processing object master 208, the outside NIC reception processing unit 502 transfers the packet as it is to the inside NIC 104.

When the packet received by the outside NIC 108 is not an XPTCP processing object transferred to the XPTCP gateway apparatus 101, the outside NIC reception processing unit 502 transfers the packet as it is to the TCP/IP protocol stack 205.

When the packet received by the outside NIC 108 is a processing object packet, coinciding with the XPTCP processing object master 208, the reception packet decision unit 701 then examines the details of the packet.

If the packet is a TCP data packet, the reception packet decision unit 701 provides the TCP data packet to the address replacement unit 702.

The address replacement unit 702 searches through the outside NIC address table 210 with a source MAC address, a source IP address, a source port number, a destination MAC address, a destination IP address, and a destination port number, to identify a corresponding record. The address replacement unit 702 then rewrites the source MAC address, the source IP address, the source port number, the destination MAC address, the destination IP address, and the destination port number of the packet, for transfer to the TCP/IP protocol stack 205.

If the packet is a TCP FIN packet, the packet signals an end of the connection formed in the TCP/IP protocol stack 205, and at the same time, there arises a necessity of deleting the corresponding records in the inside NIC address table 209 and the outside NIC address table 210. As described above, these records have to be timely deleted after lapse of a predetermined time from the end of connections with both of the outside NIC 108 and the inside NIC 104.

Then, the reception packet decision unit 701 provides the TCP FIN packet to the record removal processing unit 703.

The record removal processing unit 703 searches through an inside NIC address table with the source MAC address, the source IP address, the source port number, the destination MAC address, the destination IP address, and the destination port number, which are written in the TCP FIN packet, to identify a corresponding record and acquire an index port number of the record.

Then, it is confirmed whether or not the acquired index port number is in the removal schedule list 605. If the removal schedule list 605 includes the index port number, the value of the address table update counter 213 at this time is written in the counter value field for timers of the corresponding record of the outside NIC address table 210 and the inside NIC address table 209 related to the index port number. Then, the record removal processing unit 703 provides the TCP FIN packet to the address replacement unit 702.

The address replacement unit 702, as in the case of the TCP data packet described above, rewrites the source MAC address, the source IP address, the source port number, the destination MAC address, the destination IP address, and the destination port number of the TCP FIN packet, for transfer to the TCP/IP protocol stack 205.

In rewriting the MAC address, IP address, and port number which are written in the packet, the address replacement unit 702 refers to the temporary IPMAC list 204.

Hereinafter, the details of the outside NIC transmission processing unit 503 are described.

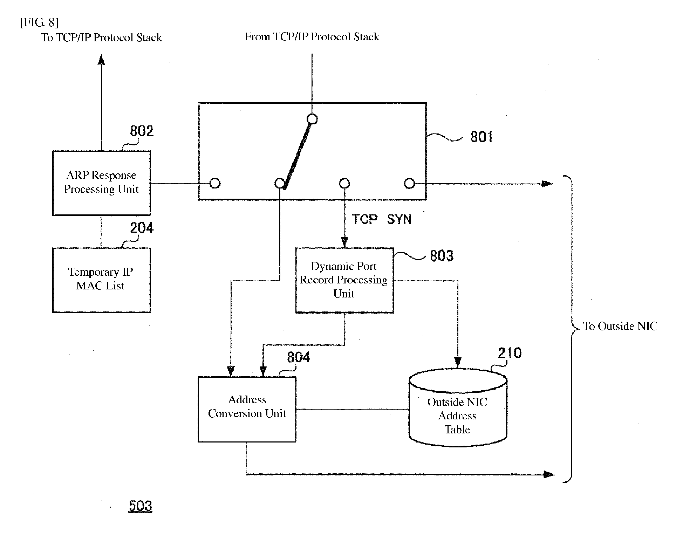

Figure 8 is a functional block diagram of the outside NIC transmission processing unit 503.

When the transmission packet decision unit 801 receives a packet sent from the TCP/IP protocol stack 205, it initially determines whether the packet is an address rewriting excluded packet, or an address rewriting object TCP packet, or an ARP request packet.

If the packet is a packet not subject to address rewriting, it is transmitted as it is to the outside NIC 108.

When the packet is an ARP request packet, and when the inquiry IP address written in the ARP request packet is a second temporary IP address, the packet corresponds to a packet to be transmitted by the TCP/IP protocol stack 205 in forming a connection in order to identify a MAC address to be written in the packet. Then, the transmission packet decision unit 801 provides the ARP request packet to the ARP response processing unit 802.

In response, the RP response processing unit 802 refers to the temporary IPMAC list 204 to send a second temporary MAC address to the TCP/IP protocol stack 205.

When the packet is a TCP packet, and the destination IP address written in the packet is a second temporary IP address, the transmission packet decision unit 801 then confirms whether or not the packet is a TCP SYN packet. If the packet is a TCP SYN packet, it indicates that the TCP/IP protocol stack 205 has newly created a connection. Thus, the source port number, i.e. a dynamic port number, of the connection newly created by the TCP/IP protocol stack 205 is needed to be stored in the outside NIC address table 210. Then, the transmission packet decision unit 801 provides the TCP SYN packet to the dynamic port record processing unit 803.

The dynamic port record processing unit 803 acquires the source port number, i.e. the dynamic port number, and the index port number as a destination port number, written in the TCP SYN packet. If the record of the outside NIC address table 210 is identified with the index port number, the dynamic port number is recorded in the dynamic port number field of the record. The dynamic port record processing unit 803 then provides the TCP SYN packet to the address recovery unit 804.

The address recovery unit 804 acquires the source MAC address, the source IP address, the source port number, the destination MAC address, the destination IP address, and the destination port number of the record previously identified with the destination port number in the outside NIC address table 210. The address recovery unit 804 then restores the source MAC address, the source IP address, the source port number, the destination MAC address, the destination IP address, and the destination port number of the packet, for transmission to the outside NIC 108.

When the packet is a TCP packet, and the destination IP address written in the packet is a second temporary IP address, the transmission packet decision unit 801 confirms whether the packet is a TCP SYN packet. If it is not a TCP SYN packet, the transmission packet decision unit 801 provides the TCP packet to the address recovery unit 804.

The address recovery unit 804 acquires the source MAC address, the source IP address, the source port number, the destination MAC address, the destination IP address, and the destination port number of the record previously identified with the index port number in the outside NIC address table 210. The address recovery unit 804 then restores the source MAC address, the source IP address, the source port number, the destination MAC address, the destination IP address, and the destination port number of the packet, for transmission to the outside NIC 108.

Hereinafter is described in detail the inside NIC transmission processing unit 504.

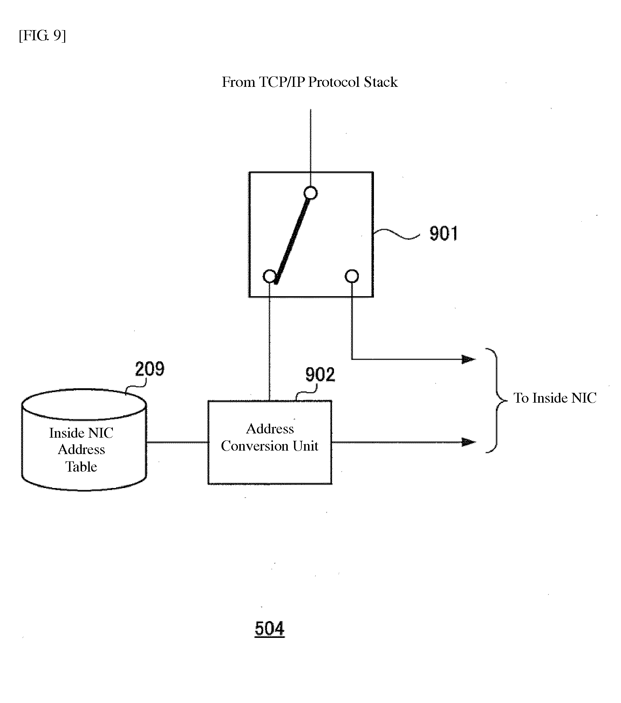

Figure 9 is a functional block diagram of the inside NIC transmission processing unit 504.

When the transmission packet decision unit 901 receives a packet sent from the TCP/IP protocol stack 205, it initially determines whether the packet is an address rewriting excluded packet or an address rewriting object TCP packet.

If the packet is not an object of address rewriting, the packet is transmitted as it is to the inside NIC 104.

When the packet is a TCP packet, and the destination IP address written in the packet is a first temporary IP address, the transmission packet decision unit 901 provides the TCP packet to the address recovery unit 902.

The address recovery unit 902 acquires the source MAC address, the source IP address, the source port number, the destination MAC address, the destination IP address, and the destination port number of the record identified with the index port number in the inside NIC address table 209. The address recovery unit 902 then restores the source MAC address, the source IP address, the source port number, the destination MAC address, the destination IP address, and the destination port number of the packet, for transmission to the inside NIC 104.

Hereinafter, the details of the table update processing unit 505 are described.

The table update processing unit 505 is activated every second to increment the address table update counter 213, test the count value field for timers of all the records of the inside NIC address table 209 and the outside NIC address table 210, and confirm whether there are records older than 60 seconds with respect to a connection closed with the arrival of a TCP FIN packet. If there is such a record, the record is deleted.

Next, the details of the policy replying unit 506 are described.

In response to a policy inquiry accompanying the index port number sent from the XPTCP processing unit 206, the policy replying unit 506 refers to the XPTCP processing object master 208 and the inside NIC address table 209 to send in reply the record number of the XPTCP processing object master 208 for designating an encryption type or the like with respect to the connection specified by the index port number.

### [Internal configuration of XPTP processing unit 206]

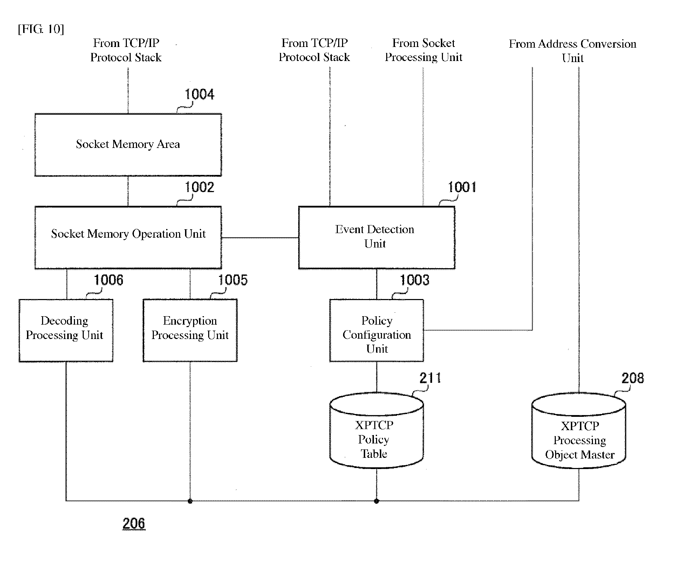

Figure 10 is a functional block diagram of the XPTCP processing unit 206.

The event detection unit 1001 detects an accept event, a connect request event, and a close event, which are obtained from the TCP/IP protocol stack 205 to control the socket memory operation unit 1002 and the policy setting unit 1003.

The socket memory operation unit 1002 provides a data stream obtained from a socket to the encryption processing unit 1005 or the decoding processing unit 1006 to provide the processed data stream to a predetermined socket on the socket memory area 1004 which is formed on the RAM, not shown, by the TCP/IP protocol stack 205.

The policy setting unit 1003 sends an inquiry to the address conversion processing unit about a policy, using the index port number as an argument that has been obtained from the socket operation unit 1002 via the event detection unit 1001. To this inquiry, the policy replying unit 506 of the address conversion processing unit sends in reply the record number of the XPTCP processing object master 208. Then, the policy setting unit 1003 records and links the index port number and the record number of the XPTCP processing object master 208 in the XPTCP policy table 211.

The encryption processing unit 1005 refers to the XPTCP policy table 211 and the XPTCP processing object master 208 to perform the designated encryption process with respect to the data stream received from the socket operation unit 1002.

The decoding processing unit 1006 refers to the XPTCP policy table 211 and the XPTCP processing object master 208 to perform the designated decoding process with respect to the data stream received from the socket operation unit 1002.

The XPTCP processing unit 206 originally has an authentication function. However, in the XPTCP gateway apparatus 101 of the present embodiment, description regarding authentication is omitted because operation associated with authentication is out of the scope of the present invention. For this reason, the functional block diagram of the XPTCP processing unit 206 shown in Figure 10 omits illustration of the functional blocks associated with authentication.

### [Operation of the XPTCP gateway apparatus 101 / Operation of the address conversion unit 203]

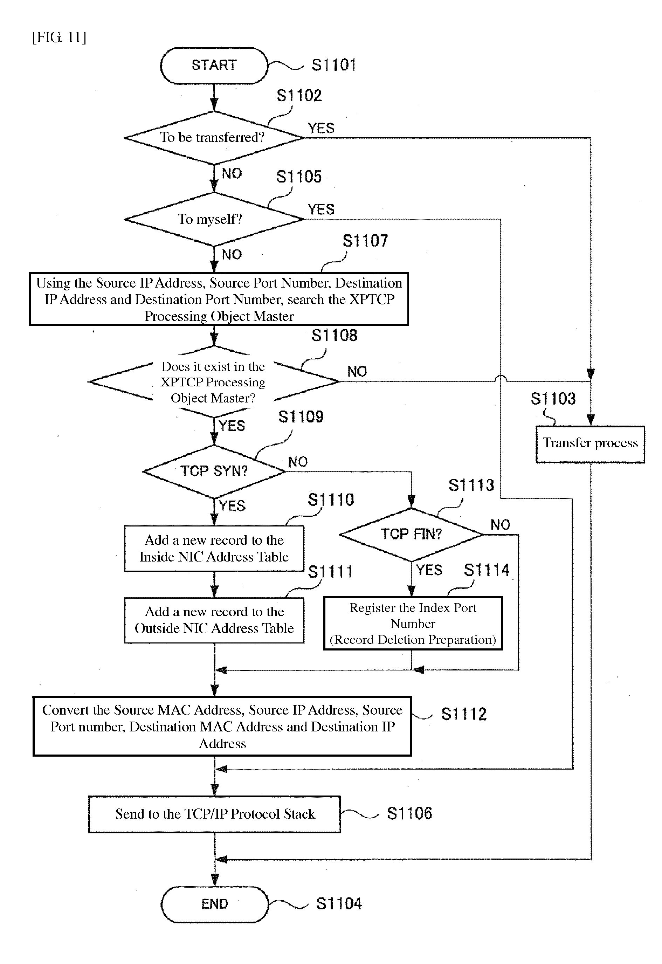

With reference to flowcharts of Figures 11 to 17, hereinafter is described a flow of operation of the XPTCP gateway apparatus 101.

Figure 11 is a flowchart of the packet reception process in the inside NIC 104 of the address conversion unit 203. This corresponds to a flow of operation of the inside NIC reception processing unit 501.

When the process is started (S1101), the reception packet decision unit 601 initially determines whether or not the packet received by the inside NIC 104 is a processing excluded packet apparently subject to transfer, such as an ARP packet, an ICMP packet, or the like (S1102).

As a result of the determination, if the received packet is a processing excluded packet apparently subject to transfer, such as an ARP packet, an ICMP packet, or the like (YES in S1102), the packet is transferred as it is by the receiving packet decision unit 601 to the outside NIC 108 (S1103) to terminate the series of processings (S1104).

At step S1102, when the received packet is not a processing excluded packet apparently subject to transfer (NO in S1102), the receiving packet decision unit 601 then determines whether or not the packet is a XPTCP processing excluded packet transmitted to the XPTCP gateway apparatus 101 (S1105).

As a result of the determination, if the received packet is a XPTCP processing excluded packet transmitted to the XPTCP gateway apparatus 101 (YES in S1105), the receiving packet decision unit 601 transfers the packet as it is to the TCP/IP protocol stack 205 (S1106) to terminate the series of processings (S1104).

If at step S1105, the received packet is not a XPTCP processing excluded packet transmitted to the XPTCP gateway apparatus 101 (NO in S1105), the reception packet decision unit 601 searches through the XPTCP processing object master 208 with the source IP address, the source port number, the destination IP address, and the destination port number of the packet (S1107).

As a result of the search, if there is no combination of the source IP address, the source port number, the destination IP address, and the destination port number of the received packet in the XPTCP processing object master 208 (NO in S1108), the packet is not an object of processing by the XPTCP gateway apparatus 101. Accordingly, the reception packet decision unit 601 transfers the packet as it is to the outside NIC 108 (S1103) to terminate the series of processings (S1104).

At step S1108, if the combination of the source IP address, the source port number, the destination IP address, and the destination port number of the received packet is in the XPTCP processing object master 208 (YES in S1108), the packet is an object of processing by the XPTCP gateway apparatus 101. Accordingly, the MAC address, the IP address, and the port number written in the packet are required to be rewritten. Then, the reception packet decision unit 601 looks into the further details of the received packet.

The reception packet decision unit 601 determines whether or not the received packet is a TCP SYN packet (S1109).

As a result of the determination, if the received packet is a TCP SYN packet (YES in S1109), the reception packet decision unit 601 provides the TCP SYN packet to the connection registration processing unit 603.

Upon reception of the TCP SYN packet, the connection registration processing unit 603 refers to the TCP port number memory to obtain a new (non-overlapped) port number. After that, the connection registration processing unit 603 additionally records the port number as a new record in the inside NIC address table 209, together with the source IP address, the source port number, the destination IP address, and the destination port number of the received packet (S1110). A similar new record with the same contents is also additionally created in the outside NIC address table 210 (S1111).

The connection registration processing unit 603 additionally records the new record in the inside NIC address table 209 and the outside NIC address table 210, and then provides the TCP SYN packet that has been provided by the reception packet decision unit 601 to the address replacement unit 602.

The address replacement unit 602 refers to the index port number and the temporary IPMAC list 204 provided by the connection registration processing unit 603 to rewrite the source MAC address, the source IP address, the source port number, the destination MAC address, and the destination IP address of the TCP SYN packet (S1112). Specifically, the address replacement unit 602 rewrites:
- the source MAC address written in the packet into a first temporary MAC address;
- the source IP address written in the packet into a first temporary IP address;
- the source port number written in the packet into an index port number;
- the destination MAC address written in the packet into an inside NIC MAC address; and
- the destination IP address written in the packet into an inside NIC IP address.
However, the destination port number is not changed.

After performing replacement processing of the IP address and the like, the address replacement unit 602 transmits the TCP SYN packet to the TCP/IP protocol stack 205 (S1106) to terminate the series of processings (S1104).

At step S1109, if the received packet is not a TCP SYN packet (NO in S1109), the reception packet decision unit 601 determines whether or not the subsequently received packet is a TCP FIN packet (S1113).

As a result of the determination, if the received packet is a TCP FIN packet (YES in S1109), the reception packet decision unit 601 provides the TCP FIN packet to the record removal preparation unit 604 together with an index port number.

The record removal preparation unit 604 writes the index port number of the TCP FIN packet in the removal schedule list 605 (S1104). Then, the record removal preparation unit 604 provides the TCP FIN packet and the index port number to the address replacement unit 602.

The address replacement unit 602 refers to the index port number and the temporary IPMAC list 204 provided from the reception packet decision unit 601 via the record removal preparation unit 604 to rewrite the source MAC address, the source IP address, the source port number, the destination MAC address, the and destination IP address of the TCP FIN packet (S1112). Specifically, the source MAC address written in the packet is rewritten into a first temporary MAC address, the source IP address written in the packet is rewritten into a first temporary IP address, the source port number written in the packet is rewritten into an index port number, the destination MAC address written in the packet is rewritten into an inside NIC MAC address, and the destination IP address written in the packet is rewritten into an inside NIC IP address. However, the destination port number is not changed.

After performing the replacement processing of the IP address and the like, the address replacement unit 602 transmits the TCP FIN packet to the TCP/IP protocol stack 205 (S1106) to terminate the series of processes (S1104).

At step S1113, if the received packet is not a TCP FIN packet (NO in S1113), the packet is a TCP data packet. Therefore, the reception packet decision unit 601 provides the TCP data packet to the address replacement unit 602 together with an index port number.

The address replacement unit 602 refers to the index port number and the temporary IPMAC list 204 provided by the reception packet decision unit 601 to rewrite the source MAC address, the source IP address, the source port number, the destination MAC address, and the destination IP address of the TCP data packet (S1112). Specifically, the source MAC address written in the packet is rewritten into a first temporary MAC address, the source IP address written in the packet is rewritten into a first temporary IP address, the source port number written in the packet is rewritten into an index port number, the destination MAC address written in the packet is rewritten into an inside NIC MAC address, and the destination IP address written in the packet is rewritten into an inside NIC IP address. The destination port number, however, is not changed.

After performing the replacement processing of the IP address and the like, the address replacement unit 602 transmits the TCP data packet to the TCP/IP protocol stack 205 (S1106) to terminate the series of processings (S1104).

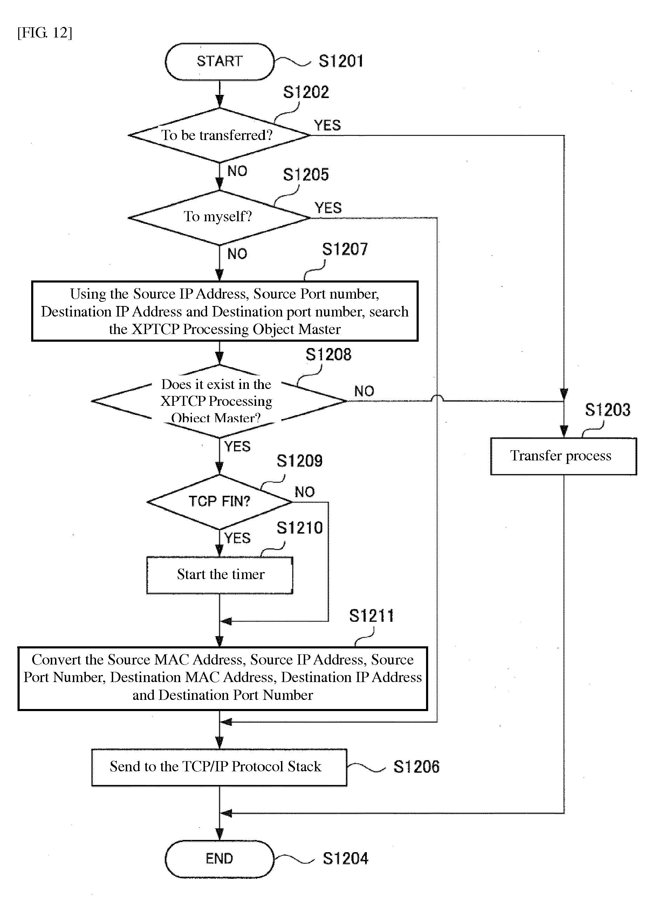

Figure 12 is a flowchart showing a flow of the packet reception process performed in the outside NIC 108 of the address conversion unit 203. This corresponds to an operation of the outside NIC reception processing unit 502.

When the process is started (S1201), the receiving packet decision unit 701 initially determines whether or not the packet received by the outside NIC 108 is a processing excluded packet apparently subject to transfer, such as an ARP packet, an ICMP packet, or the like (S1202).

As a result of the determination, when the received packet is a processing excluded packet apparently subject to transfer, such as an ARP packet, an ICMP packet, or the like (YES in S1202), the reception packet decision unit 701 transfers the packet as it is to the inside NIC 104 (S1203) to terminate the series of processings (S1204).

At step S1202, when the received packet is not a process excluded packet apparently subject to transfer (NO in S1202), the reception packet decision unit 701 then determines whether or not the packet is an XPTCP processing excluded packet transmitted to the XPTCP gateway apparatus 101 (S1205).

As a result of the determination, if the received packet is an XPTCP processing excluded packet transmitted to the XPTCP gateway apparatus 101 (YES in S1205), the reception packet decision unit 701 transfers the packet as it is to the TCP/IP protocol stack 205 (S1206) to terminate the series of processings (S1204).

At step S1205, when the received packet is not an XPTCP processing excluded packet transmitted to the XPTCP gateway apparatus 101 (NO in S1205), the reception packet decision unit 701 then searches through the XPTCP processing object master 208 with the source IP address, the source port number, the destination IP address, and the destination port number of the packet (S1207).

As a result of the search, if there is no combination of the source IP address, the source port number, the destination IP address and the destination port number of the received packet in the XPTCP processing object master 208 (NO in S1208), the packet is not an object of processing of the XPTCP gateway apparatus 101. Accordingly, the reception packet decision unit 701 transfers the packet as it is to the inside NIC 104 (S1203) to terminate the series of processings (S1204).

At step S1208, if the combination of the source IP address, the source port number, the destination IP address, and the destination port number of the received packet is in the XPTCP processing object master 208 (YES in S1208), the packet is a processing object of the XPTCP gateway apparatus 101. Accordingly, the MAC address, the IP address, and the port number written in the packet are required to be rewritten. Therefore, the reception packet decision unit 701 looks into the further details of the received packet.

The reception packet decision unit 701 determines whether or not the received packet is a TCP FIN packet (S1209).

As a result of the determination, if the received packet is a TCP FIN packet (YES in S1209), the reception packet decision unit 701 provides the TCP FIN packet to the record removal processing unit 703 together with an index port number.

After confirming that the index port number of the TCP FIN packet is in the removal schedule list 605, the record removal processing unit 703 writes the value of the address table update counter 213 in the counter value field for timers of the record related to the index port number, in the inside NIC address table 209 (S1210).

Then, the record removal processing unit 703 provides the TCP FIN packet and the index port number to the address replacement unit 702.

After performing the replacement processing of the IP address and the like, the address replacement unit 702 transmits the TCP FIN packet to the TCP/IP protocol stack 205 (S1206) to terminate the series of processings (S1204).

The address replacement unit 702 refers to the index port number and the temporary IPMAC list 204 provided from the reception packet decision unit 701 via the record removal processing unit 703 to rewrite the source MAC address, the source IP address, the source port number, the destination MAC address, the destination IP address, and the destination port number of the TCP FIN packet (S1211).

Specifically, the address replacement unit 702 rewrites:
- the source MAC address written in the packet into a second temporary MAC address;
- the source IP address written in the packet into a second temporary IP address;
- the source port number written in the packet into an index port number;
- the destination MAC address written in the packet into an outside NIC MAC address;
- the destination IP address written in the packet into an outside NIC IP address; and
- the destination port number written in the packet into a dynamic port number.

After performing the replacement processing of the IP address and the like, the address replacement unit 702 transmits the TCP FIN packet to the TCP/IP protocol stack 205 (S1206) to terminate the series of processings (S1204).

At step S1209, when the received packet is not a TCP FIN packet (NO in S1209), the packet is a TCP data packet. Accordingly, the reception packet decision unit 701 provides the TCP data packet to the address replacement unit 702 together with an index port number.

The address replacement unit 702 refers to the index port number and the temporary IPMAC list 204 provided from the reception packet decision unit 701 to rewrite the source MAC address, the source IP address, the source port number, the destination MAC address, the destination IP address, and the destination port number of the TCP data packet (S1212). Specifically, the address replacement unit 702 rewrites the source MAC address written in the packet into a second temporary MAC address, the source IP address written in the packet into a second temporary IP address, the source port number written in the packet into an index port number, the destination MAC address written in the packet into an outside NIC MAC address, the destination IP address written in the packet into an inside NIC IP address, and the destination port number written in the packet into a dynamic port number.

After performing the replacement processing of the IP address and the like, the address replacement unit 702 transmits the TCP data packet to the TCP/IP protocol stack 205 (S1206) to terminate the series of processings (S1204).

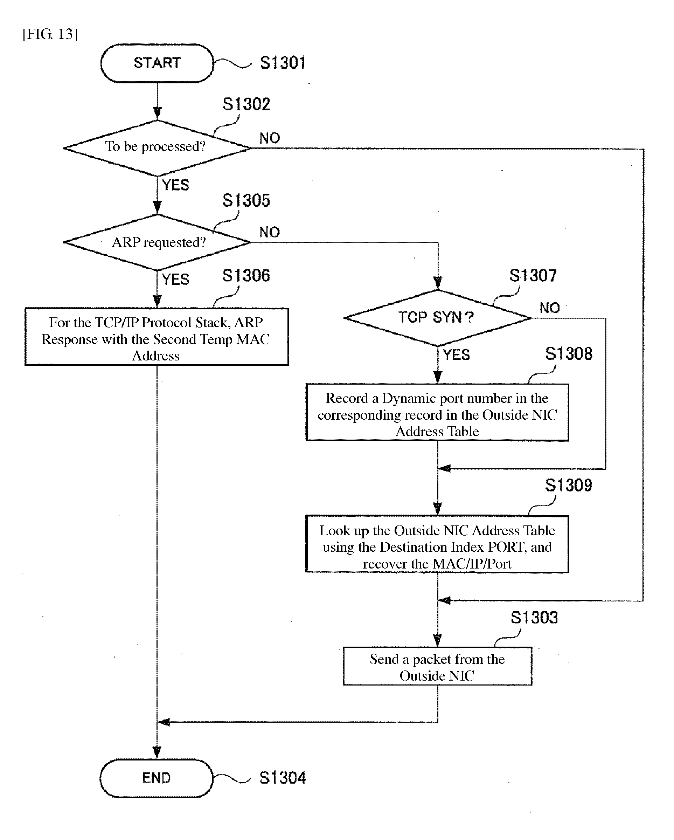

Figure 13 is a flowchart showing a flow of the packet transmission process of the outside NIC 108 in the address conversion unit 203. This corresponds to the flow of operation performed by the outside NIC transmission processing unit 503.

When the process is started (S1301), the transmission packet decision unit initially looks into the type and destination IP address of a packet received from the TCP/IP protocol stack 205.

When the type of the packet is an ICMP packet, a UDP packet, or when the type of the packet is an ARP request packet and the search IP address is not a second temporary IP address described in the temporary IPMAC list 204, or when the type of the packet is a TCP packet and the destination IP address is not the second temporary IP address described in the temporary IPMAC list 204 (NO in S1302), the packet is a packet that has not been processed by the XPTCP gateway apparatus 101. Accordingly, such a packet is not processed at all by the transmission packet decision unit and is transmitted as it is via the outside NIC 108 (S1303) to terminate the series of processes (S1304).

At step S1302, when the packet received from the TCP/IP protocol stack 205 is a TCP packet and the destination IP address is a second temporary IP address described in the temporary IPMAC list 204, or when the packet is an ARP request packet and a search IP address is a second temporary IP address described in the temporary IPMAC list 204 (YES in S1302), it is determined further whether or not the packet is an ARP request packet (YES in S1305).

When the packet is an ARP request packet and the search IP address is a second temporary IP address described in the temporary IPMAC list 204 (YES in S1305), the ARP request packet is a packet that has been generated as a result of attempting to transmit the packet to an unreal second temporary IP address by the TCP/IP protocol stack 205. The ARP request packet is not transmitted from the outside NIC 108 but has to be sent in reply by generating an ARP response packet with a second temporary MAC address that is an unreal MAC address similar to the second temporary IP address. Thus, the transmission packet decision unit provides the ARP request packet to the ARP response processing unit 802.

Upon receipt of the ARP request packet from the transmission packet decision unit, the ARP response processing unit 802 refers to the temporary IPMAC list to generate an ARP response packet with the second temporary MAC address and sends in reply this ARP response packet to the TCP/IP protocol stack 205 (S1306) to terminate the series of processings (S1304).

At step S1305, when the packet received from the TCP/IP protocol stack 205 is a TCP packet and the destination IP address is a second temporary IP address described in the temporary IPMAC list 204 (NO in S1305), the packet corresponds to a packet that has been processed by the XPTCP gateway apparatus 101. Accordingly, the MAC address, the IP address, and the port number written in the packet are required to be restored to a state before being rewritten by the inside NIC reception processing unit 501. Then, the transmission packet decision unit looks into the further details of the received packet.

The transmission packet decision unit determines whether or not the packet received from the TCP/IP protocol stack 205 is a TCP SYN packet (S1307).

As a result of the determination, if the packet received from the TCP/IP protocol stack 205 is a TCP SYN packet (YES in S1307), the TCP SYN packet is a packet that shows new establishment of a connection. In this regard, when the TCP/IP protocol stack 205 establishes a new connection, it automatically gives a dynamic port number as a source port number. Therefore, it is necessary to store this dynamic port number in the outside NIC address table 210. Then, the transmission packet decision unit provides the TCP SYN packet to the dynamic port record processing unit 803.

Upon receipt of the TCP SYN packet, the dynamic port record processing unit 803 firstly acquires the source port number of the TCP SYN packet. Then, the dynamic port record processing unit 803 searches through the outside NIC address table 210 with the index port number described at the destination port number and writes the source port number of the previously acquired TCP SYN packet in the dynamic port number field of an identified record (S1308).

In this way, the IP address or the like of the packet which goes through the connection from this point onward can be correctly substituted or restored by storing the dynamic port number written in the TCP SYN packet that indicates start of the connection.

The dynamic port record processing unit 803 provides the TCP SYN packet to the address recovery unit 902, after recording the dynamic port number.

The address recovery unit 902 refers to the record of the outside NIC address table 210, which the dynamic port recording processing unit 803 has identified previously, to rewrite the source MAC address, the source IP address, the source port number, the destination MAC address, the destination IP address, and the destination port number of the TCP SYN packet (S1309). Then the TCP SYN packet is transmitted through outside NIC 108 (S1303) to terminate the series of processings (S1304).

At step S1307, if the packet received from the TCP/IP protocol stack 205 is not a TCP SYN packet (NO in S1307), the transmission packet decision unit provides the TCP packet to the address recovery unit 902.

The address recovery unit 902 searches through the records of the outside NIC address table 210 with the index port number provided to the destination port number of the TCP packet to identify a record. Then, the address recovery unit 902 restores the source MAC address, the source IP address, the source port number, the destination MAC address, the destination IP address, and the destination port number of the TCP packet (S1309). Then, the TCP SYN packet is transmitted through the outside NIC 108 (S1303) to terminate the series of processings (S1304).

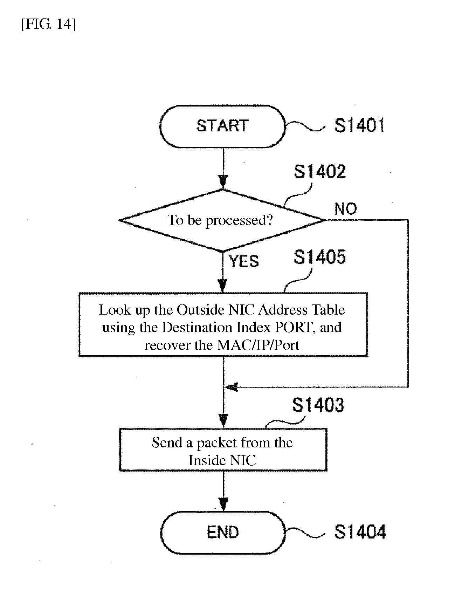

Figure 14 is a flowchart showing a flow of the packet transmission process performed by the inside NIC 104 of the address conversion unit 203. This corresponds to a flow of operation performed by the inside NIC transmission processing unit 504.

When the process is started (S1401), the transmission packet decision unit initially looks into the type and the destination IP address of a packet received from the TCP/IP protocol stack 205.

If the type of the packet is an ICMP packet, an ARP packet, or a UDP packet, or if the type of the packet is a TCP packet and the destination IP address is not the first temporary IP address described in the temporary IPMAC list 204 (NO in S1402), the packet is a packet that has not been processed by the XPTCP gateway apparatus 101. Accordingly, the transmission packet decision unit does not process such a packet at all but transmits the packet as it is through the inside NIC 104 (S1403) to terminate the series of processings (S1404).

At step S1402, when the type of the packet received from the TCP/IP protocol stack 205 is a TCP packet and the destination IP address is a first temporary IP address described in the temporary IPMAC list 204 (YES in S1402), the packet corresponds to a packet processed by the XPTCP gateway apparatus 101. Accordingly, the MAC address, the IP address, and the port number written in the packet are required to be restored to a state before being rewritten by the inside NIC reception processing unit 501. Thus, the transmission packet decision unit provides the TCP packet to the address recovery unit 902.

The address recovery unit 902 searches through the records of the inside NIC address table 209 with the index port number provided to the destination port number of the TCP packet to identify a record. The address recovery unit 902 then restores the source MAC address, the source IP address, the source port number, the destination MAC address, the destination IP address, and the destination port number of the TCP packet (S1405). Then, the TCP SYN packet is transmitted through the inside NIC 104 (S1403) to terminate the series of processings (S1404).

### [Operation of the XPTCP gateway apparatus 101 / Operation of the XPTCP processing unit 206]

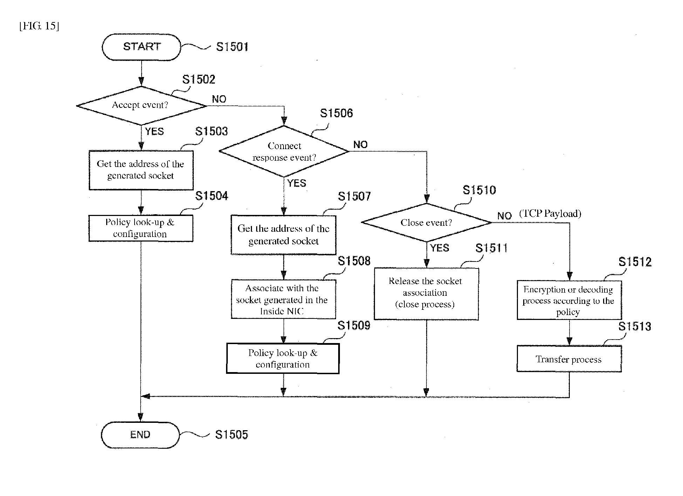

Figure 15 is a flowchart showing a flow of the XPTCP process performed by the XPTCP processing unit 206.

In the XPTCP process, predetermined authentication and encryption processings are performed in the transport layer, with respect to TCP or UDP packets. Since the basic technique of the XPTCP process is disclosed in Patent Document 1, the detailed are not described in the present embodiment. Instead, the details related to the socket process performed by the address conversion processing unit 203 described above and the socket processing unit 207 described below will be described.

When the process is started (S1501), the event detection unit 1001 confirms the socket processing unit 207 whether an accept event relative to the connection established for the inside NIC 104 has been detected (S1502). If an accept event has been detected (YES in S1502), the event detection unit 1001 controls the socket operation unit 1002 to acquire the address in the socket memory area 1004 of a generated socket (S1503). Then, the event detection unit 1001 starts the policy setting unit 1003.

The policy setting unit 1003 sends an inquiry to the address conversion unit 203 bout a policy associated with the accept event, using an index port number. The policy replying unit 506 of the address conversion unit 203 searches through the inside NIC address table 209 with the index port number to identify a record. Then, the policy replying unit 506 searches through the XPTCP processing object master 208 using the source IP address and the port number, and the destination IP address and the port number of the identified record, identifies a record, and acquires a record number of the record, followed by sending in reply the record number to the policy setting unit 1003. The policy setting unit 1003 records the acquired record number and index port number on the XPTCP policy table 211 and links them. At this point, the encryption processing unit 1005 can identify the record of the XPTCP processing object master 208, using the index port number as a key to set an encryption policy (S1504). Then, the series of processings is terminated (S1505).

At step S1502, if an accept event has not been detected (NO in S1502), the event detection unit 1001 then confirms the TCP/IP protocol stack 205 whether a connect response event related to the connection for the outside NIC 108 has been detected (S1506). If a connect response event has been detected (YES in S1506), the event detection unit 1001 controls the socket operation unit 1002 to acquire the address in the socket memory area 1004 of the generated socket, associated with the connect response event (S1507).

Next, the event detection unit 1001 correlates the socket related to the connection for the inside NIC 104 with the socket related to the connection for the outside NIC 108, these sockets sharing the same index port number (S1508). At this point, the decoding processing unit 1006 can identify the record of the XPTCP processing object master 208, using the index port number as a key to set a decoding policy (S1509). Then, the series of processings is terminated (S1505).

In this way, the data stream obtained from the socket related to the connection for the inside NIC 104 is encrypted through the encryption processing unit 1005, and the encrypted data stream is output to the socket related to the connection for the outside NIC 108. On the other hand, the data stream obtained from the socket related to the connection for the outside NIC 108 is decoded through the decoding processing unit 1006, and the decoded data stream is output to the socket related to the connection for the inside NIC 104.

At step S1506, if a connect response event has not been detected (NO in S1506), the event detection unit 1001 then confirms the TCP/IP protocol stack 205 whether a close event related to the connection for the outside NIC 108 has been detected (S1510). If a close event has been detected (YES in S1510), the event detection unit 1001 controls the socket operation unit 1002 to release the correlation between the generated sockets related to the close event, while deleting the records of the XPTCP policy table 211 (S1511). Then, the series of processings is terminated (S1505).

At step S1510, if a close event has not been detected (NO in S1510), no further action is taken by the event detection unit 1001. Instead, the encryption processing unit 1005 and the decoding processing unit 1006 receive a data stream from the socket operation unit 1002, and perform either encryption or decoding based on the encryption or the decoding policy identified in the XPTCP policy table 211 (S1512), and the socket operation unit 1002 transfers the processed data stream (S1513). Then, the series of processings is terminated (S1505).

### [Operation of the XPTCP gateway apparatus 101 / Operation of the socket processing unit 207]

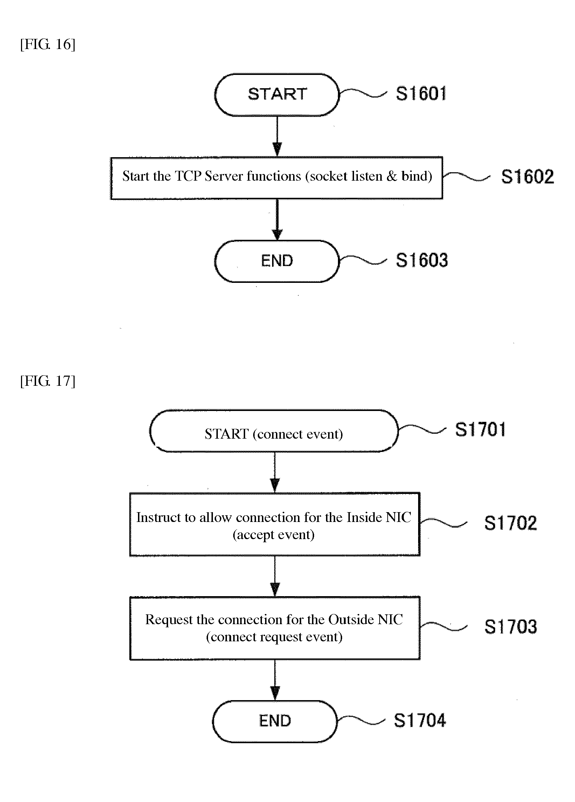

Figure 16 is a flowchart showing a flow of initial operation of the socket processing unit 207.

When the process is started (S1601), the socket processing unit 207 starts a TCP server function for a predetermined port number (S1602). At this time, a socket to receive a request is created (socket function) for the inside NIC 104, and a port number for use in receiving a request is defined for the socket (bind function). Then, the series of processings is terminated (S1603).

FIG. 17 is a flowchart showing a flow of a connection request transfer process of the socket processing unit 207.

Upon reception of a connect event from the TCP/IP protocol stack 205 (S1301), the socket processing unit 207 issues an accept event, approving a connection to the inside NIC 104 via a socket (S1702). This is a behavior as a server. Then, the socket processing unit 207 issues a connect request event, requesting a connection to the outside NIC 108 (S1703). This is a behavior as a client. Then, the series of processings is terminated (S1704).

### [Operation of the XPTCP gateway apparatus 101 / Change of packet caused by the address conversion unit 203]

Figures 18 to 20 are schematic diagrams illustrating change of a packet that passes through the XPTCP gateway apparatus 101.

The first MAC address and the first IP address are provided to the XPTCP-unsupported PC 103.

The second MAC address and the second IP address are provided to the XPTCP-supported server 107.

When a packet is transmitted to the XPTCP-supported server 107 from the XPTCP-unsupported PC 103, the transmission packet reaches the address conversion unit 203 via the inside NIC 104. The address conversion unit 203 refers to the inside NIC address table 209 to perform an address conversion process. Then, the transmission packet turns to an address-conversion-process-applied transmission packet.

The destination IP address of the converted packet is an IP address of the inside NIC 104. Accordingly, the TCP/IP protocol stack 205 receives the address-conversion-process-applied packet and strips headers from the packet in order of a MAC header, IP header, and TCP header, and the payload is connected to the packet to restore a data stream. The restored data stream reaches the XPTCP processing unit 206 through a socket. The XPTCP processing unit applies a predetermined encryption process to the data stream. Then, the encrypted data stream is supplied to the socket created for the outside NIC 108

The TCP/IP protocol stack 205 divides the encrypted data stream into predetermined byte lengths to add a TCP header, an IP header, and a MAC header thereto to create an encrypted and address-conversion-process-applied transmission packet. That is, the destination IP address of the transmission packet created at this time is a second temporary IP address, not the IP address (second IP address) of the XPTCP-supported server 107 for which the packet is originally destined. Then, the address conversion unit refers to the outside NIC address table 210 to perform an address restoration process. Then, the encrypted and address-conversion-process-applied transmission packet turns to an encryption-process-applied transmission packet and reaches the server 107.

When the encryption-process-applied reception packet is returned to the XPTCP-unsupported PC 103 from the XPTCP-supported server 107, the encryption-process-applied reception packet reaches the address conversion processing unit 203 via the outside NIC 108. The address conversion unit 203 refers to the outside NIC address table 210 to perform an address conversion process. Then, the encryption-process-applied reception packet turns to an encrypted and address-conversion-process-applied reception packet.

The destination IP address of the encrypted and address-conversion-process-applied reception packet is an IP address of the outside NIC 108. Therefore, the TCP/IP protocol stack 205 receives the encrypted and address-conversion-process-applied reception packet, and strips the headers from the packet in order of a MAC header, IP header, and a TCP header, connects the payload to the packet, and restores an encryption data stream. The restored encryption data stream reaches the XPTCP processing unit via a socket. The XPTCP processing unit applies a predetermined decoding process to the data stream. Then, the decoded data stream is supplied to the socket created for the outside NIC 108.

The TCP/IP protocol stack 205 divides the decoded stream data into predetermined byte lengths to add a TCP header, IP header and a MAC header to create an address-conversion-process-applied reception packet. That is, the destination IP address created at this time is a first temporary IP address, and is not the IP address (first IP address) of the XPTCP-unsupported PC 103 which is the original destination. The address conversion unit then refers to the inside NIC address table 209 to perform an address restoration process. Then, the address-conversion-process-applied reception packet turns to a reception packet and reaches the XPTCP-unsupported PC 103.

### [Operation of the XPTCP gateway apparatus 101 / TCP connection establishment sequence]

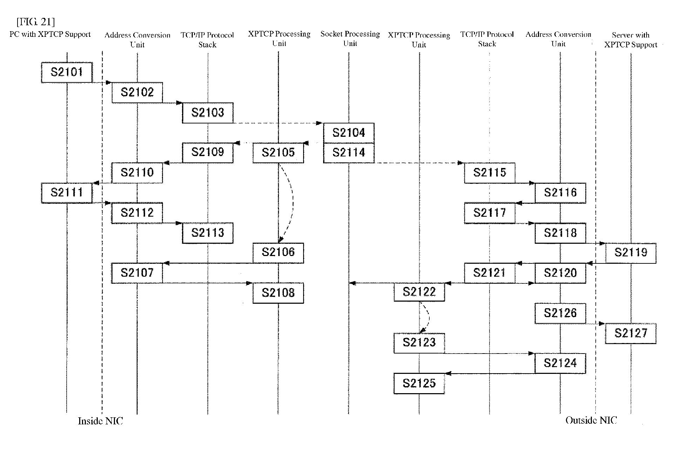

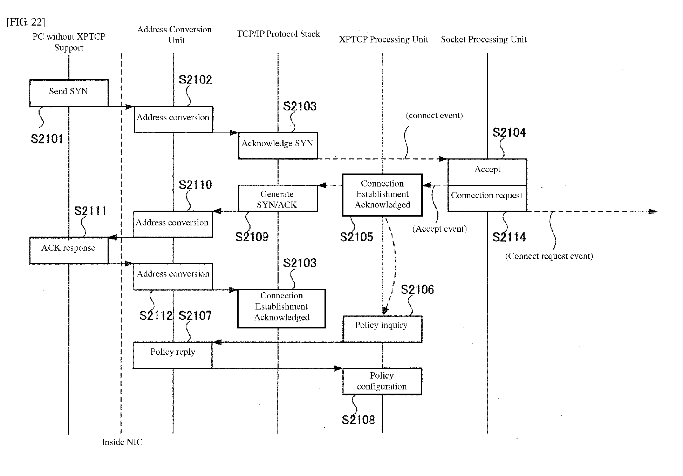

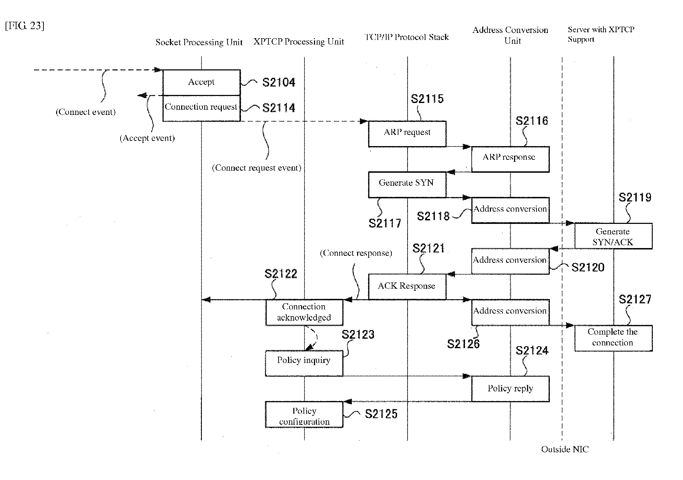

Figures 21 to 23 are timing diagrams of the TCP connection establishment sequence in the XPTCP gateway apparatus 101. Figure 21 is an overview showing the entire timing diagrams, Figure 22 illustrates details of the first half processing of the timing diagrams, and Figure 23 illustrates the second half processing of the timing diagrams.

In response to the transmission of the TCP SYN packet from a terminal, TCP connection is established between the terminal and the XPTCP gateway apparatus 101 and between the server and the XPTCP gateway apparatus 101. The figures illustrate transition with time of the operation of the XPTCP gateway apparatus 101 before the TCP connection is established.

When the XPTCP-unsupported PC 103 operates an application program, such as a web browser, and attempts to establish a connection with the XPTCP-supported server 107, the XPTCP-unsupported PC 103 transmits a TCP SYN packet according to the application program (S2101).

The TCP SYN packet reaches the address conversion unit 203 through the inside NIC 104. The inside NIC reception processing unit 501 of the address conversion unit 203 converts the source and destination MAC addresses, IP addresses and port numbers of the TCP SYN packet (S2102). At this point, a new record is additionally created in the inside NIC address table 209 to enable identification of the record with an index port number.

The TCP SYN packet applied with the address conversion process then reaches the TCP/IP protocol stack 205. The TCP/IP protocol stack 205 recognizes the TCP SYN packet transmitted to a port number that has been prepared in advance by the socket processing unit 207 and issues a connect event to the socket processing unit 207 in order to start creation of a connection (S2103).

The socket processing unit 207, using its server function, issues an accept event (connection approval) to the TCP/IP protocol stack 205 in response to the connect event (connection request) (S2104).

The XPTCP processing unit 206 hooks the accept event to recognize that creation of the connection has been started for the inside NIC 104 (S2105). Then, the XPTCP processing unit 206 sends an inquiry, being accompanied by an index port number, to the address conversion unit 203 about the policy to be applied to the connection (S2106). In response to the inquiry, the address conversion unit 203 refers to the XPTCP processing object master 208 and the inside NIC address table 209 to send in reply a record number of the XPTCP processing object master 208 (S2107). The XPTCP processing unit 206 registers and links the record number and the index port number in the XPTCP policy table 211 to set the policy of the decoding processing unit 1006 (S2108).

The accept event issued at step S2104 then reaches the TCP/IP protocol stack 205. Receiving the accept event, the TCP/IP protocol stack 205 generates a TCP ACK/SYN packet (S2109). The TCP ACK/SYN packet reaches the address conversion unit 203. The inside NIC transmission processing unit 504 of the address conversion unit 203 restores the source and destination MAC addresses, IP addresses and the port numbers of the TCP ACK/SYN packet (S2110).

Then the TCP ACK/SYN packet reaches the XPTCP-unsupported PC 103 through the inside NIC 104. Receiving the TCP ACK/SYN packet, the XPTCP-unsupported PC 103 responds with a TCP ACK packet (S2111).

The TCP ACK packet reaches the address conversion unit 203 through the inside NIC 104. The inside NIC reception processing unit 501 of the address conversion unit 203 converts the source and destination MAC addresses, IP addresses and port numbers of the TCP ACK packet (S2112).

The TCP ACK packet applied with the address conversion process reaches the TCP/IP protocol stack 205. With the arrival of the TCP ACK packet, the TCP/IP protocol stack 205 recognizes that the connection has been established (S2113). From this point onward, TCP data packets are transmitted and received through the connection.

After issuing the accept event as a server function for the inside NIC 104 at step S2104, the socket processing unit 207 issues a connect request event as a client function indicating a connection request for the outside NIC 108 (S2114).

The connect request event reaches the TCP/IP protocol stack 205. Receiving the connect request event, the TCP/IP protocol stack 205 generates an ARP request packet (S2115).

The ARP request packet reaches the address conversion unit 203. The outside NIC transmission processing unit 503 of the address conversion unit 203 generates an ARP response packet in response to the ARP request packet, and sends it in reply to the TCP/IP protocol stack 205 (S2116).

Receiving the ARP response packet, the TCP/IP protocol stack 205 is in readiness to generate a TCP SYN packet corresponding to the connect request event at step S2114. Thus, the TCP/IP protocol stack 205 generates a TCP SYN packet (S2117).

The TCP SYN packet generated at step S2117 reaches the address conversion unit 203. The outside NIC transmission processing unit 503 of the address conversion unit 203 converts the source and destination MAC addresses, IP addresses and port numbers of the TCP SYN packet (S2118). At this point, a dynamic port number which is automatically written in the TCP SYN packet as a source port number by the TCP/IP protocol stack 205 is recorded at the record of the outside NIC address table 210.

The TCP SYN packet then reaches the XPTCP-supported server 107 through the outside NIC 108. Upon reception of the TCP SYN packet, the XPTCP-supported server 107 responds with a TCP ACK/SYN packet (S2119).

The TCP ACK/SYN packet reaches the address conversion unit 203 through the outside NIC 108. The outside NIC reception processing unit 502 of the address conversion unit 203 converts the source and destination MAC addresses, IP addresses and port numbers of the TCP ACK/SYN packet (S2120).

Then, the TCP ACK/SYN packet applied with the address conversion process reaches the TCP/IP protocol stack 205. Upon reception of the TCP ACK/SYN packet, the TCP/IP protocol stack 205 responds with a TCP ACK packet (S2121). In this case, the TCP/IP protocol stack 205 gives a notification of the connect response event to the socket processing unit 207 serving as a client program.

The XPTCP processing unit 206 hooks the connect response event to recognize the start of creation of the connection for the outside NIC 108 (S2122). Then, the XPTCP processing unit 206 sends an inquiry, being accompanied by an index port number, to the address conversion unit 203 about a policy to be applied to the connection (S2123). In response to the inquiry, the address conversion unit 203 refers to the XPTCP processing object master 208 and the inside NIC address table 209 to send in reply a record number of the XPTCP processing object master 208 (S2124). The XPTCP processing unit 206 registers and links the record number and the index port number in the XPTCP policy table 211 to set the policy of the encryption processing unit 1005 (S2125).

The TCP ACK packet issued from the TCP/IP protocol stack 205 at step S2121 reaches the address conversion unit 203. The outside NIC transmission processing unit 503 of the address conversion unit 203 then restores the source and destination MAC addresses, IP addresses and port numbers of the TCP ACK packet (S2126).

The TCP ACK packet then reaches the XPTCP-supported server 107 through the outside NIC 108. With the arrival of the TCP ACK packet, the XPTCP-supported server 107 recognizes that a connection has been established (S2127). From this point onward, TCP data packets are transmitted and received through the connection.

### [Operation of the XPTCP gateway apparatus 101 / TCP data transmission sequence]

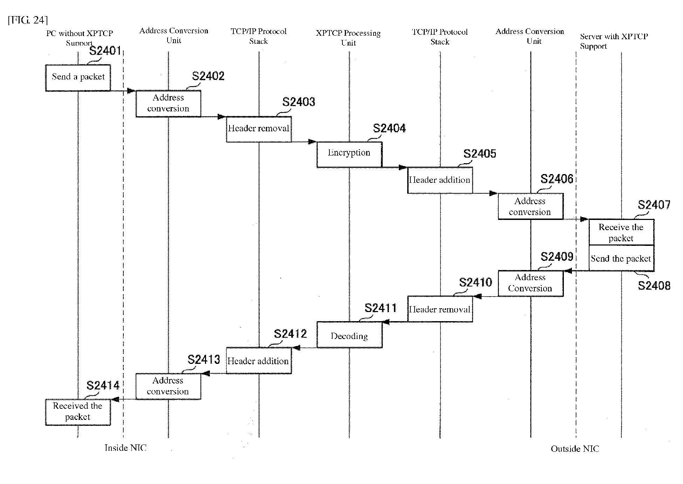

Figure 24 is a timing diagram of the TCP data transmission sequence in the XPTCP gateway apparatus 101. In response to the transmission of the TCP data packet from a terminal, a TCP connection is established between the terminal and the XPTCP gateway apparatus 101 and between the server and the XPTCP gateway apparatus 101. The figure illustrates transition with time of the XPTCP gateway apparatus 101 when the TCP data packet passes through the TCP connection.

When the XPTCP-unsupported PC 103 operates an application program, such as a web browser, and attempts to transmit data to the XPTCP-supported server 107, the XPTCP-unsupported PC 103 transmits a TCP data packet according to the application program (S2401).

The TCP data packet reaches the address conversion unit 203 through the inside NIC 104. The inside NIC reception processing unit 501 of the address conversion unit 203 converts the source and destination MAC addresses, IP addresses and port numbers IP of the TCP data packet (S2402).

The TCP data packet applied with the address conversion process then reaches the TCP/IP protocol stack 205. The TCP/IP protocol stack 205 removes the header of the TCP data packet to connect the TCP data packet payload, for restoration to a data stream (S2403).

The data stream is applied with an encryption process by the XPTCP processing unit 206 and then transferred to the socket of the outside NIC 108 (S2404).

The data stream applied with the encryption process reaches the TCP/IP protocol stack 205. The TCP/IP protocol stack 205 segments the stream data into predetermined byte lengths, and then adds headers to the segments, for conversion into a TCP data packet (S2405).

The TCP data packet then reaches the address conversion unit 203. The outside NIC transmission processing unit 503 of the address conversion unit 203 converts the source and destination MAC addresses, IP addresses and port numbers of the TCP data packet (S2406).

The TCP data packet applied with the address restoration process reaches the XPTCP-supported server 107 through the outside NIC 108 (S2407). Upon reception of the TCP data packet, the XPTCP-supported server 107 performs a predetermined process and then transmits the TCP data packet as reply data to the XPTCP-unsupported PC 103 (S2408).

The TCP data packet then reaches the address conversion unit 203 through the outside NIC 108. The outside NIC reception processing unit 502 of the address conversion unit 203 converts the source and destination MAC addresses, IP addresses and port numbers of the TCP data packet (S2409).

The TCP data packet applied with the address conversion process reaches the TCP/IP protocol stack 205. The TCP/IP protocol stack 205 removes the header to connect the TCP data packet payload, for restoration into a data stream (S2410).

The data stream is applied with a decoding process by the XPTCP processing unit 206 and transferred to the socket of inside NIC 104 (S2411).

The data stream applied with the decoding process reaches the TCP/IP protocol stack 205. The TCP/IP protocol stack 205 segments the data stream into predetermined byte lengths and then adds headers, for conversion into a TCP data packet (S2412).

The TCP data packet then reaches the address conversion unit 203. The inside NIC transmission processing unit 504 of the address conversion unit 203 converts the source and destination MAC addresses, IP addresses and port numbers of the TCP data packet (S2413).

The TCP data packet applied with the address restoration process is sent to the XPTCP-unsupported PC 103 through the inside NIC 104 (S2414).

### [Operation of the XPTCP gateway apparatus 101 / TCP disconnect sequence]

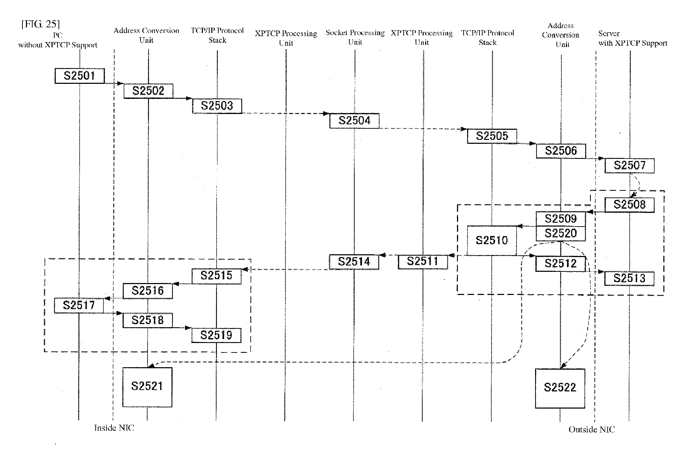

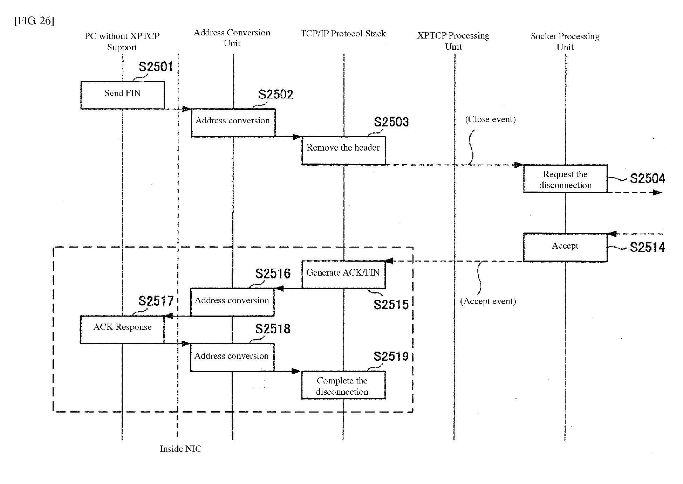

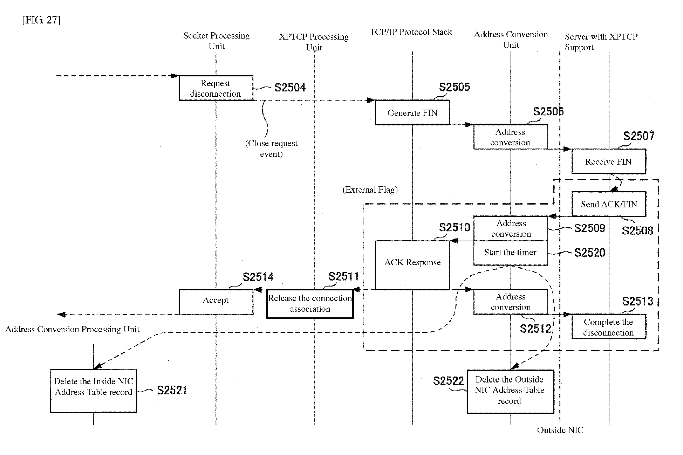

Figures 25 to 27 are timing diagrams of the TCP disconnect sequence in the XPTCP gateway apparatus 101. Figure 25 is an overview showing the entire timing diagrams, Figure 26 illustrates details of the first half processing, and Figure 27 illustrates the details of the second half processing.

In response to the transmission of the FIN packet from a terminal, a TCP connection is established between the terminal and the XPTCP gateway apparatus 101 and between the server and the XPTCP gateway apparatus 101. The figures illustrate transition with time of the operation of the XPTCP gateway apparatus 101 before the TCP connection is ended (closed).

The XPTCP-unsupported PC 103 operates an application program, such as a web browser, to request predetermined data to the XPTCP-supported server 107. Once the requested data is obtained, the XPTCP-unsupported PC 103 transmits a TCP FIN packet according to the application program (S2501).

The TCP FIN packet reaches the address conversion unit 203 through the inside NIC 104. The inside NIC reception processing unit 501 of the address conversion unit 203 converts the source and destination MAC addresses and IP addresses and port numbers of the TCP FIN packet (S2102). At this point, an index port number is additionally recorded in the removal schedule list 605.

Then, the TCP FIN packet applied with the address conversion process reaches the TCP/IP protocol stack 205. The TCP/IP protocol stack 205 recognizes the TCP FIN packet transmitted to the port number that has been prepared in advance by the socket processing unit 207 and issues a close event to the socket processing unit 207 as a server program to give a notification of closure of the connection to the socket processing unit 207 (S2503).

After receiving the close event as a server function for the inside NIC 104 at step S2503, the socket processing unit 207 issues a close request event as a client function for the outside NIC 108 (S2504).

The close request event reaches the TCP/IP protocol stack 205. Upon reception of the close request event, the TCP/IP protocol stack 205 generates a TCP FIN packet (S2505).

The TCP FIN packet generated at step S2505 reaches the address conversion unit 203. The outside NIC transmission processing unit 503 of the address conversion unit 203 then converts the source and destination MAC addresses, IP addresses and port numbers of the TCP FIN packet (S2506).

The TCP FIN packet reaches the XPTCP-supported server 107 through the outside NIC 108 (S2507). Receiving the TCP FIN packet, the XPTCP-supported server 107, if it judges all data that should have been transmitted to the PC 103 has been transmitted, issues a TCP ACK/FIN packet (S2508).

The TCP ACK/FIN packet reaches the address conversion unit 203 through the outside NIC 108. The outside NIC reception processing unit 502 of the address conversion unit 203 then converts the source and destination MAC addresses, IP addresses and port numbers of the TCP ACK/FIN packet (S2509).

The TCP ACK/FIN packet applied with the address conversion process then reaches the TCP/IP protocol stack 205. Upon reception of the TCP ACK/FIN packet, the TCP/IP protocol stack 205 responds with a TCP ACK packet (S2510). In this case, the TCP/IP protocol stack 205 gives a notification of the close response event to the socket processing unit 207 as a client program.

The XPTCP processing unit 206 hooks the close response event and releases the correlation of the connection for the outside NIC 108 with the connection for the inside NIC 104 (S2511).

The TCP ACK packet generated by the TCP/IP protocol stack 205 at step S2510 reaches the address conversion unit 203. The outside NIC transmission processing unit 503 of the address conversion unit 203 converts the source and destination MAC addresses, IP addresses and port numbers of the TCP ACK packet (S2512).

The TCP ACK packet then reaches the XPTCP-supported server 107 through the outside NIC 108. Receiving the TCP ACK packet, the XPTCP-supported server 107 recognizes that disconnection of the connection has been completed (closed) (S2513).

On the other hand, the close response event generated by the TCP/IP protocol stack 205 at step S2510 reaches the socket process part 207. Detecting the close response event, the TCP/IP protocol stack 205 recognizes the arrival of the TCP FIN packet for the connection for the outer side NIC 108. At this point, a disconnection process for the connection for the inside NIC 104 can be performed. Then, an accept event is sent to the TCP/IP protocol stack 205 in response to the close event sent by the TCP/IP protocol stack 205 at step S2503 (S2514).

The accept event sent by the socket processing unit 207 at step S2514 reaches the TCP/IP protocol stack 205. Upon reception of the accept event, the TCP/IP protocol stack 205 generates a TCP ACK/FIN packet (S2515). The TCP ACK/FIN packet reaches the address conversion unit 203. The inside NIC transmission processing unit 504 of the address conversion unit 203 restores the source and destination MAC addresses, IP addresses and port numbers of the TCP ACK/FIN packet (S2516).

The TCP ACK/FIN packet then reaches the XPTCP-unsupported PC 103 through the inside NIC 104. Upon reception of the TCP ACK/FIN packet, the XPTCP-unsupported PC 103 responds with a TCP ACK packet (S2517).

The TCP ACK packet then reaches the address conversion unit 203 through the inside NIC 104. The inside NIC reception processing unit 501 of the address conversion unit 203 converts the source and destination MAC addresses, IP addresses and port numbers of the TCP ACK packet (S2518).

The TCP ACK packet applied with the address conversion process reaches the TCP/IP protocol stack 205. With the arrival of the TCP ACK packet, the TCP/IP protocol stack 205 recognizes that the disconnection of the connection has been completed (S2519).

On the other hand, after performing address conversion at step S2509, the address conversion unit writes the value of the address table update counter in the counter value field for timers of the inside NIC address table 209 and the outside NIC address table 210 (S2520). The table update processing unit 505 periodically monitors the counter value field of the inside NIC address table 209 and the outside NIC address table 210 and, after lapse of a predetermined time, deletes the records of the inside NIC address table 209 and the outside NIC address table 210 (S2521, S2522).

As can be appreciated, the TCP FIN packet alone is not the means for disconnecting the TCP connection. A TCP RST packet is provided to forcibly disconnect the TCP connection in an abnormal state, such as freezing of an application program. In the disconnect sequence of when the TCP RST packet is generated, the processings enclosed by dotted lines in Figures 25 to 27 are changed, the detailed description of which is omitted.

### [Summarization]

The packet P1402 received from the XPTCP-unsupported PC 102 is unrelated to the IP addresses of inside NIC 104 and the outside NIC 108. Accordingly, the TCP/IP protocol stack 205 cannot apply the predetermined packet processings to the packet P1402 as it is. In this regard, the source MAC address, the source IP address, the source port number, the destination MAC address, the destination IP address, and the destination port number written in the packet P1402 are pre-written once in the record of the inside NIC address table 209. Further, consecutive port numbers as indexes are assigned for restoration later. Then, in order that the TCP/IP protocol stack 205 is able to apply reception processings to a packet, the packet P1402 is rewritten into a packet P1405 so as to serve as a "packet that has been transmitted from a virtual host having a first temporary IP address to the IP address of the inside NIC".

Note that, in this case, the Index port is provided to a source port number, but a destination port number remains unchanged. In almost all cases, a destination port number is a specific port number which is known and called well-known port. XPTCP is also mounted for a specific service. Since XPTCP is required to be applied with encryption processes specific to each service and each service must be distinguished with a destination port number, the destination port numbers alone are permitted to remain unchanged in rewriting the source and destination MAC addresses, IP addresses and port numbers written in the packet.

As explained above, the XPTCP gateway apparatus 101 rewrites the source MAC address, the source IP address, the destination MAC address, and the destination IP address written in the received packet so that the internal TCP/IP protocol stack 205 can once deal with the packet. Then, just before transmitting the packet, the source MAC address, the source IP address, the destination MAC address, and the destination IP address are restored. Thus, the XPTCP gateway apparatus 101 only has to be connected to and inserted in a communication path to easily provide XPTCP function, without requiring any change at all in the settings of the existing network environment.

As an additional effect, the XPTCP gateway apparatus 101 cannot be recognized by any terminals or servers connected thereto. Since even an ICMP packet, such as PING, will be transferred as it is, the XPTCP gateway apparatus 101 serves as a completely invisible apparatus as far as the network is concerned.

As further additional effect, the IP addresses set to the inside NIC 104 and the outside NIC 108 of the XPTCP gateway apparatus 101 do not interfere with any hosts connected to the XPTCP gateway apparatus 101. That is, no problem is caused whether the IP addresses set to the inside NIC 104 and the outside NIC 108 may be unrelated at all to the sub-net to which the XPTCP gateway apparatus 101 is connected, or whether the IP addresses may overlap with those of connected hosts. Since the addresses of all the packets are internally subject to address conversion or address restoration in transmission by the XPTCP gateway apparatus 101, the IP addresses set to the inside NIC 104 and the outside NIC 108 are not visible to an outside network. The IP addresses set to the inside NIC 104 and the outside NIC 108 may be any addresses except for special addresses, such as loopback addresses and multicast addresses.

### [Applications]

The XPTCP gateway apparatus 101 according to the present embodiment may be implemented in applications as provided below.
(1) The XPTCP gateway apparatus 101 can easily install a server function. For example, in order to provide a user interface for editing the XPTCP processing object master, a web server program is executed to cope in advance with a specified port number. As an example, a port number 10030 is used.
   When the destination port number is 10030, the XPTCP processing unit 206 provides the port number as it is to a web server program without performing an encryption process. When the XPTCP processing unit 206 is configured in this way, the XPTCP gateway apparatus 101 can easily provide a server function.
(2) The address conversion unit 203 has a reason for having the implementation mode in which the source and destination MAC addresses, IP addresses and port numbers are rewritten in two tables which are the inside NIC address table 209 and the outside NIC address table 210.

When the destination IP address field of the outside NIC address table 210 is rewritten, a terminal can communicate with a server having an IP address different from an intended IP address.

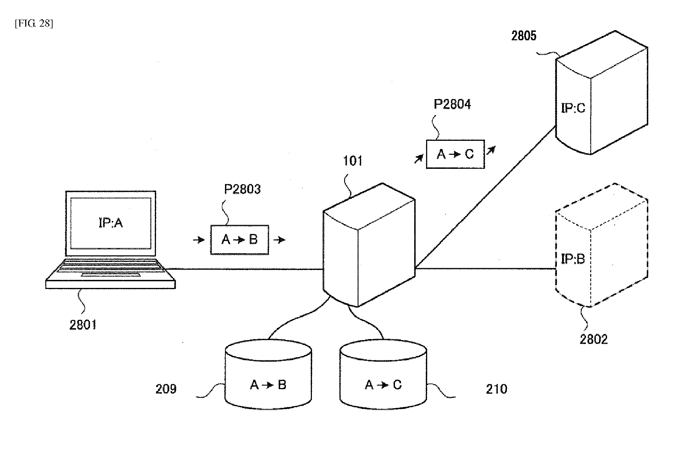

Figure 28 is the schematic diagram illustrating an application mode in which the destination IP address of the packet to be transmitted is rewritten in the XPTCP gateway apparatus 101.

An IP address called "A" is provided to the terminal 2801. The terminal 2801 transmits a packet P2803, attempting to establish a connection with a server 2801 provided with an IP address called "B". The source IP address of the packet P2803 is "A" and the destination IP address thereof is "B".

The inside NIC address table 209 of the XPTCP gateway apparatus 101 is required to faithfully reproduce the correlation between "A" and "B", and therefore, the IP addresses are recorded as they are.

However, the outside NIC address table 210 does not necessarily need to faithfully reproduce the correlation between "A" and "B". When a destination IP address is rewritten to "C", a packet P2804 sent from the XPTCP gateway apparatus 101 will have a source IP address of "A" and a destination IP address of "C". Thus, the packet P2804 reaches a server 2805 whose IP address is "C".

In this way, the XPTCP gateway apparatus 101 can rewrite the destination IP address registered in the outside NIC address table 210 to convert the destination IP address into a destination which is not grasped by the terminal 2801. When this operation is applied, VPN (Virtual Private Network) can be easily set up by linking two or more XPTCP gateway apparatuses 101.

(3) The address conversion unit 203 has a reason for having the implementation mode in which the source and destination MAC addresses, IP addresses and port numbers are rewritten in two tables which are the inside NIC address table 209 and the outside NIC address table 210.

When the source IP address field of the outer side NIC address table 210 is rewritten, the true IP address of the terminal 2801 can be concealed from a malicious third party on the server side.

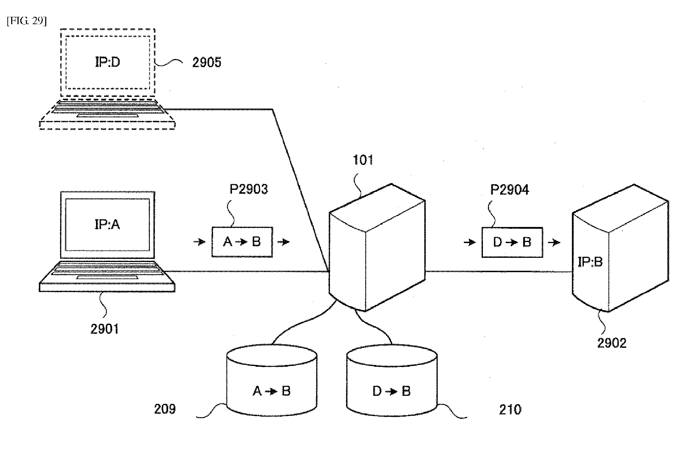

Figure 29 is a schematic diagram illustrating an application mode in which the source IP address of a packet to be transmitted is rewritten in the XPTCP gateway apparatus 101.

An IP address called "A" is provided to a terminal 2901. The terminal 2901 transmits a packet P2903, attempting to establish a connection with a server 2902 provided with an IP address called "B". The source IP address of the packet P2903 is "A" and the destination IP address thereof is "B".

The inside NIC address table 209 of the XPTCP gateway apparatus 101 is required to faithfully reproduce the correlation between "A" and "B", and therefore, the IP addresses are recorded as they are.

However, the outside NIC address table 210 does not necessarily need to faithfully reproduce the correlation between "A" and "B". When a source IP address is rewritten to "D", a packet P2904 sent from the XPTCP gateway apparatus 101 will have a source IP address of "D" and a destination IP address of "B". Thus, since the source IP address appears as if it has been transmitted from a virtual terminal 2905 of "D", the presence of the terminal 2901 whose IP address is "A" can be concealed.

Thus, the XPTCP gateway apparatus 101 can conceal a source IP address from a malicious third party by rewriting the source IP address registered in the outside NIC address table 210.

(4) The encryption processing unit 1005 applies an encryption process to the data stream extracted for restoration by the TCP/IP protocol stack 205 from the payload part of a TCP data packet. In the encryption process, the entire data stream need not necessarily be encrypted.

For example, in well-known TELNET (TCP port No. 23), the entire data stream is required to be encrypted.

However, for example, in well-known SMTP (Simple Mail Transfer Protocol: TCP port No. 25), a transmitted mail may be transferred through several SMTP servers. In this case, it is difficult that all the SMTP servers perform XPTCP authentication and encryption process. Therefore, only the source terminal and the host on the final reception side are subject to authentication and encryption process, and only the content-text of the SMTP message is subject to encryption. As is well known, the SMTP message is divided into a header and a content-text, using one linefeed as a separator, and the header is added with information (Received: header) which is recorded as the mail travels through hosts, such as SMTP servers.

The encryption processing unit 1005 of the present embodiment also encrypts the content-text alone of the mail, not the entire data stream, according to the protocol, including a protocol that can divide a data stream into a header and a content-text, such as SMTP or HTTP.

In the present embodiment, a network gateway apparatus is disclosed.

A process of "deceiving" the TCP/IP protocol stack 205 is performed in order to implement the XPTCP gateway apparatus 101 with the addition of a minimum requisite program, while the TCP/IP protocol stack 205 preinstalled in the existing network OS is utilized to the utmost. For the TCP/IP protocol stack 205 to process a packet that is unrelated to the IP address allocated to the XPTCP gateway apparatus 101, the source MAC address, the source IP address, the source port number, the destination MAC address, the destination IP address, and the destination port number which are written in the packet in advance are pre-written in the inside NIC address table 209 and the outside NIC address table 210. Then, the source MAC address and the source IP address written in the reception packet are rewritten into a false MAC address and a false IP address, respectively. Also, the destination MAC address and the destination IP address are rewritten into the IP address and the MAC address allocated to the XPTCP gateway apparatus 101. Then, these addresses are provided to the TCP/IP protocol stack 205.

Further, when transmitting a packet to an original transmission destination, the TCP/IP protocol stack 205 is deceived and the source MAC address, the source IP address, the destination MAC address and the destination IP address of the packet transmitted from the TCP/IP protocol stack 205 are restored to the original addresses pre-written in the rewriting table, for transmission of the packet to the original destination, so that the packet is returned from the IP address and the MAC address allocated to the XPTCP gateway apparatus 101 to the false MAC address and the false IP address.

Thus, in the XPTCP gateway apparatus 101, the source MAC address, the source IP address, the destination MAC address, and the destination IP address written in the received packet are rewritten so that the internal TCP/IP protocol stack 205 can once process the received packet. Then, just before transmission, the source MAC address, the source IP address, the destination MAC address, and the destination IP address are restored again. Therefore, the existing network environment does not require any setting changes other than simply placing and inserting the XPTCP gateway apparatus 101 in the communication path to establish a connection. Thus, the XPTCP function can be easily provided.

Embodiments of the present invention have so far been described however the present invention is not limited to these embodiments. The present invention encompasses other modifications and applications as far as these modifications and applications do not depart from the spirit of the invention recited in the claims.

### [Description of the References]

101...XPTCP gateway apparatus; 102...XPTCP-unsupported PC;, 103...XPTCP-unsupported PC; 104...inside NIC; 105...XPTCP-unsupported PC; 106...XPTCP-supported PC; 107...XPTCP-supported server; 108...outside NIC; 109...XPTCP-unsupported network; 110... XPTCP-supported network; 201...initial setting unit; 202...network setting information memory; 203...address conversion unit; 204...temporary IPMAC list; 205...TCP/IP protocol stack; 206... XPTCP processing unit; 207...socket processing unit; 208...XPTCP processing object master; 209...inside NIC address table; 210...outside NIC address table; 211...XPTCP policy table; 212...TCP port number memory; 213...address table update counter; 401...IP header; 402...MAC header; 403...TCP header; 404...UDP header; 501...inside NIC reception processing unit; 502: outside NIC reception processing unit; 503...outside NIC transmission processing unit; 504...inside NIC transmission processing unit; 505...table update processing unit; 506...policy replying unit; 601...reception packet decision unit; 602...address conversion unit; 603...connection registration processing unit; 604...record removal preparation unit; 605...removal schedule list; 701...reception packet decision unit; 702...address replacement unit; 703...record removal processing unit; 801...transmission packet decision unit; 802...ARP response processing unit; 803...dynamic record processing unit; 804...address recovery unit; 901...transmission packet decision unit; 902...address recovery unit; 1001...event detection unit; 1002...socket operation unit; 1003...policy setting unit; 1004...socket memory area; 1005...encryption processing unit; 1006...decoding processing unit; 2801...terminal; 2802...server; 2805...server; 2901...server; 2902...server; 2905...virtual terminal

## Claims

1. A network gateway apparatus comprising:
a first NIC;
a second NIC;
an initial setting unit that sets a promiscuous mode in the first NIC and the second NIC;
a TCP/IP protocol stack that performs TCP/IP communication processing between the first NIC and the second NIC; and
an address conversion unit that converts a source MAC address written in a reception packet received from the first NIC into a first temporary MAC address, converts a source IP address into a first temporary IP address, converts a destination MAC address to a first NICMAC address written in the first NIC, and converts a destination IP address to a first NICIP address written in the first NIC, to transmit the reception packet to the TCP/IP protocol stack, and restore a source MAC address, a source IP address, a destination MAC address and a destination IP address written in a transmission packet received from the TCP/IP protocol stack, to the source MAC address, the source IP address, the destination MAC address and the destination IP address written in the reception packet, for transmission to the second NIC.

2. A network gateway apparatus according to claim 1, further comprising
an address conversion table that includes a source MAC address field for storing the source MAC address written in the reception packet, a source IP address field for storing the source IP address written in the reception packet, a destination MAC address field for storing the destination MAC address written in the reception packet, a destination IP address for recording the destination IP address written in the reception packet, and an index port number field for recording an index port number for use as an index having univocality, wherein:
the address conversion unit converts the source port number written in the reception packet into the index port number recorded in the index port number field and, at the same time, searches through the index port number field of the address conversion table with the destination port number written in the transmission packet to specify a record to be restored.

3. The network gateway apparatus according to claim 2, further comprising an extended TCP processing unit that applies a predetermined encryption process to a payload part of a reception packet received from the TCP/IP protocol stack.

4. The network gateway apparatus according to claim 3, further comprising a socket processing that includes a server function for forming a first TCP connection for the first NIC and a client function for forming a second TCP connection for the second NIC, and, when a TCP FIN packet arrives from the first NIC, detects an arrival of a TCP FIN packet from the second NIC to send an instruction for disconnecting the first TCP connection to the TCP/IP protocol stack.

5. The network gateway apparatus according to claim 4, wherein the address conversion unit adds a record to the address conversion table upon arrival of a TCP SYN packet from the first NIC.

6. The network gateway apparatus according to claim 5, wherein the extended TCP processing unit applies the encryption process to a data stream that is caused from the first TCP connection and about to reach the socket processing unit, and then transfers the encrypted data stream to the second TCP connection.

7. The network gateway apparatus according to claim 4, wherein the address conversion unit receives an ARP request packet issued from the TCP/IP protocol stack when the second TCP connection is formed in response to the arrival of a TCP SYN packet from the first NIC, and then transmits in reply a pseudo ARP response packet that includes a false MAC address to the TCP/IP protocol stack.

8. The network gateway apparatus according to claim 2, wherein the address conversion unit adds a record to the address conversion table upon arrival of a TCP SYN packet from the first NIC.

9. The network gateway apparatus according to claim 8, further comprising an extended TCP processing unit that applies a predetermined encryption process to a payload part of a reception packet received from the PCT/IP protocol stack to return the packet to the TCP/IP protocol stack.

10. The network gateway apparatus according to claim 1, further comprising:
a first NIC address conversion table that includes a first source MAC address field for storing the source MAC address written in the reception packet, a first source IP address field for storing the source IP address written in the reception packet, a first destination MAC address field for storing the destination MAC address written in the reception packet, a first destination IP address field for recording the destination IP address written in the reception packet, and a first index port number field for recording an index port number for use as an index having univocality; and
a second NIC address conversion table that includes a second index port number field for recording the index port number, and a dynamic port number field for recording a dynamic port number generated by the TCP/IP protocol stack, wherein:
the address conversion unit converts a source port number written in the reception packet into the index port number recorded in the first index port number field of the first NIC address conversion table and, at the same time, searches through the second index port number field of the second NIC address conversion table with a destination port number written in the transmission packet to specify a record to be restored.

11. The network gateway apparatus according to claim 1, further comprising:
an extended PCT processing object master that includes a source IP address field, a source port number field, a destination IP address field and a destination port number field, wherein:
the address conversion unit converts the source MAC address, the source IP address, the destination MAC address and the destination IP address written in a reception packet received from the first NIC when a combination of source and destination IP addresses and port numbers of a TCP packet received from the first NIC is registered in the extended TCP processing object master, and transfers a reception packet received from the first NIC to the second NIC when the packet received from the first NIC is not registered in the extended TCP processing object master.

12. The network gateway apparatus according to claim 11, wherein:
the address conversion unit:
converts the source MAC address, the source IP address, the destination MAC address and the destination IP address written in a reception packet received from the first NIC when a combination of source and destination IP addresses and port numbers of a TCP packet received from the first NIC is registered in the extended TCP processing object master; and
transfers the TCP packet received from the first NIC as it is to the TCP/IP protocol stack when the TCP packet is not registered in the extended TCP processing object master, and a destination IP address of the TCP packet is an IP address originally allocated to the first NIC.
